# EUROPEAN PATENT APPLICATION

(11) **EP 2 827 249 A1**
(43) Date of publication of application: **21.01.2015**
(21) Application number: 14176252.6
(22) Date of filing: 09.07.2014
(51) Int. Cl.: G06F 11/14, H04M 1/725

(54) **Mobile terminal with user-interface for managing backups**

(30) Priority: 19.07.2013 KR 20130085409
(71) Applicant: LG Electronics, Inc., Seoul 150-721 (KR)
(72) Inventor: Cho, Daeduek, 137-893 Seoul (KR)
(74) Representative: Urner, Peter

(57) **Abstract**

A mobile terminal includes a display unit (151), a memory (160) and a controller (180). The display unit (151) outputs screen information. The memory stores (160), together with backup data of the mobile terminal, a backup image obtained by imaging the screen information at the time when a control command is input, based on the control command input while the screen information is being output. The controller (180) recovers the mobile terminal, using the backup data, based on a touch input applied to the backup image.

## Description

### BACKGROUND OF THE INVENTION

### 1. Field of the Invention

The present disclosure relates to a mobile terminal including a function of backing up and recovering data thereof.

### 2. Description of the Conventional Art

In general, a terminal may be classified into a mobile (portable) terminal and a stationary terminal according to a moveable state. The mobile terminal may be also classified into a handheld terminal and a vehicle mount terminal according to a user's carriage method.

As functions of the terminal become more diversified, the terminal can support more complicated functions such as capturing images or video, reproducing music or video files, playing games, receiving broadcast signals, and the like. By comprehensively and collectively implementing such functions, the mobile terminal may be embodied in the form of a multimedia player or a device.

Various attempts have been made to implement complicated functions in such a multimedia device by means of hardware or software.

As a mobile terminal performs various functions, there may occur a case where an unwanted change of data occurs while a user is manipulating the mobile terminal or where the change of the data is cancelled. A complicated control command should be applied to back up the state of the mobile terminal before the change of the data occurs. When a recovery file is stored, a user has difficulty in detecting in which state the data are stored in the file.

### SUMMARY OF THE INVENTION

Therefore, an aspect of the detailed description is to provide a mobile terminal and a method for controlling the same, which can easily store backup data of the mobile terminal, and provide the backup data in a form distinguishable by a user.

To achieve these and other advantages and in accordance with the purpose of this specification, as embodied and broadly described herein, a mobile terminal includes: a display unit configured to output screen information; a memory configured to store, together with backup data of the mobile terminal, a backup image obtained by imaging the screen information at the time when a control command is input, based on the control command input while the screen information is being output; and a controller configured to recover the mobile terminal, using the backup data, based on a touch input applied to the backup image.

In one exemplary embodiment, the mobile terminal may further include a memory configured to store various information of the mobile terminal. The backup data may be formed with information stored in the memory at the time when the control command is input among the information stored in the memory.

In one exemplary embodiment, the backup data may be formed with some information related to the screen information output on the display unit at the time when the control command is input among the information stored in the memory.

In one exemplary embodiment, the information stored in the memory may include at least one of an application installed in the mobile terminal, a media file, a telephone number of an external terminal, driving setting information of the mobile terminal, an icon included in the screen information to execute the application, and a layout of the screen information.

In one exemplary embodiment, the controller may recover at least some of the information included in the memory, based on a user's selection.

In one exemplary embodiment, the controller may control the display unit to display information to be again corrected by the backup data, based on a touch input applied to the backup image after the information stored in the memory is changed by a user.

In one exemplary embodiment, the controller may control the display unit to display some information deleted by the backup data among the changed information stored in the memory and information to be installed by the backup data.

In one exemplary embodiment, the control command may be created by the user, based on deletion or installation of an application.

In one exemplary embodiment, the screen information may include at least one content arranged by a specific layout. The control command may be input based on a change of the layout.

In one exemplary embodiment, the screen information may correspond to one of a plurality of home screen pages to be selectively output on the display unit by the user. The backup data may include information on the plurality of home screen pages. The controller may recover the plurality of home screen pages, based on a touch input applied to the backup image.

In one exemplary embodiment, the screen information may correspond to one of a plurality of home screen pages to be selectively output on the display unit by the user. The controller may control the memory to store a plurality of backup images corresponding to the respective home screen pages, based on the control command.

In one exemplary embodiment, the controller may selectively recover some of the home screen pages, based on a touch input applied to some of the plurality of backup images.

In one exemplary embodiment, the home screen page may include at least one content arranged by a layout set by the user. The controller may form backup data including the layout of the home screen page, and form the home screen page as a backup image.

In one exemplary embodiment, the controller may activate a memo mode for outputting an image according to a trace of a touch input applied to the screen information, based on a previously set control command. The controller may form, as a backup image, the image based on the touch input and the screen information.

In one exemplary embodiment, the controller may control the display unit to output an edition screen for editing at least one home screen page. The controller may form the at least one home screen page as the backup image, based on a touch input applied to one home screen page.

In one exemplary embodiment, the edition screen may include a previously stored backup image. The controller may recover the mobile terminal, based on backup data corresponding to a touch input applied to the previously stored backup image.

In one exemplary embodiment, the mobile terminal may further include a radio communication unit configured to transmit or receive a radio signal to or from an external terminal or web storage. The controller may control the radio communication unit to transmit the backup data and the backup image to the external terminal or store the backup data and the backup image in the web storage.

To achieve these and other advantages and in accordance with the purpose of this specification, as embodied and broadly described herein, a method for controlling a mobile device includes: outputting screen information on a display unit; backing up information stored in the mobile terminal, based on a control command applied while the screen information is being output; forming the screen information as a backup image and storing the backup image; outputting the stored backup image on the display unit; and recovering the mobile terminal, using the backup data, based on a touch input applied to the backup image.

In one exemplary embodiment, the method may further include outputting information to be changed by the backup data, based on a touch input applied to the backup image.

In one exemplary embodiment, the backup image may be stored in a storage space of a gallery application for storing a photograph taken by a camera. The recovering of the mobile terminal may include outputting an execution screen of the gallery application including the backup image.

According to the present invention, backup data can be more easily formed in a state in which screen information is output on the display unit, and the screen information can be formed as a backup image.

Accordingly, the mobile terminal can be backed up without using any separate backup program, and the user can recover the mobile terminal by selecting a backup image.

Further scope of applicability of the present application will become more apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from the detailed description.

### BRIEF DESCRIPTION OF THE DRAWING

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a block diagram illustrating a mobile terminal according to an exemplary embodiment;
FIGS. 2A and 2B are conceptual views of a communication system in which the mobile terminal is operable according to an exemplary embodiment;
FIG. 3A is a front perspective view illustrating an example of the mobile terminal;
FIG. 3B is a rear perspective view of the mobile terminal shown in FIG. 3A;
FIG. 4 is a flowchart illustrating a method for controlling the mobile terminal according to an exemplary embodiment;
FIG. 5 is a conceptual view illustrating the method of FIG. 4;
FIGS. 6A to 6D are conceptual views illustrating control methods for backing up the mobile terminal according to various exemplary embodiments;
FIG. 7 is a conceptual view illustrating a control method for providing a plurality of home screen pages of backup data corresponding to a backup image;
FIGS. 8A to 8D are conceptual views illustrating a control method for recovering the mobile terminal, using backup data;
FIGS. 9A to 9G are conceptual views illustrating a control method for selective recovery;
FIGS. 10A and 10B are conceptual views illustrating a control method for transmitting and receiving a backup file; and
FIG. 11 is a conceptual view illustrating a control method for performing backup when an unintended touch input is applied to a display unit.

### DETAILED DESCRIPTION OF EXEMPLARY EMBODIMENTS

Description will now be given in detail according to the exemplary embodiments, with reference to the accompanying drawings. For the sake of brief description with reference to the drawings, the same or equivalent components will be provided with the same reference numbers, and description thereof will not be repeated. A suffix "module" or "unit" used for constituent elements disclosed in the following description is merely intended for easy description of the specification, and the suffix itself does not give any special meaning or function. In describing the present invention, if a detailed explanation for a related known function or construction is considered to unnecessarily divert the gist of the present disclosure, such explanation has been omitted but would be understood by those skilled in the art. The accompanying drawings are used to help easily understood the technical idea of the present invention and it should be understood that the idea of the present disclosure is not limited by the accompanying drawings.

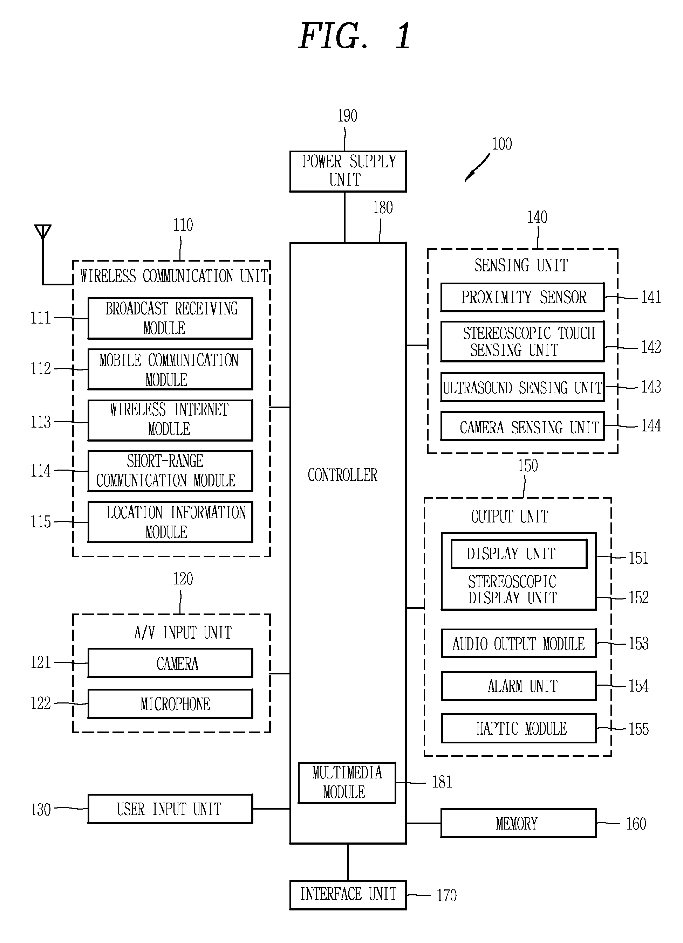

FIG. 1 is a block diagram of a mobile terminal 100 in accordance with one exemplary embodiment.

The mobile terminal 100 may comprise components, such as a wireless communication unit 110, an Audio/Video (A/V) input unit 120, a user input unit 130, a sensing unit 140, an output unit 150, a memory 160, an interface unit 170, a controller 180, a power supply 190 and the like. FIG. 1 shows the mobile terminal 100 having various components, but it is understood that implementing all of the illustrated components is not a requirement. Greater or fewer components may alternatively be implemented.

Hereinafter, each component 110 to 190 is described in sequence.

The wireless communication unit 110 may typically include one or more modules which permit wireless communications between the mobile terminal 100 and a wireless communication system or between the mobile terminal 100 and a network within which the mobile terminal 100 is located. For example, the wireless communication unit 110 may include at least one of a broadcast receiving module 111, a mobile communication module 112, a wireless Internet module 113, a short-range communication module 114, a location information module 115 and the like.

The broadcast receiving module 111 receives a broadcast signal and/or broadcast associated information from an external broadcast managing entity via a broadcast channel.

The broadcast channel may include a satellite channel and a terrestrial channel. The broadcast managing entity may indicate a server which generates and transmits a broadcast signal and/or broadcast associated information or a server which receives a pre-generated broadcast signal and/or broadcast associated information and sends them to the mobile terminal. The broadcast signal may be implemented as a TV broadcast signal, a radio broadcast signal, and a data broadcast signal, among others. The broadcast signal may further include a data broadcast signal combined with a TV or radio broadcast signal.

Examples of broadcast associated information may include information associated with a broadcast channel, a broadcast program, a broadcast service provider, and the like. The broadcast associated information may be provided via a mobile communication network, and received by the mobile communication module 112.

The broadcast associated information may be implemented in various formats. For instance, broadcast associated information may include Electronic Program Guide (EPG) of Digital Multimedia Broadcasting (DMB), Electronic Service Guide (ESG) of Digital Video Broadcast-Handheld (DVB-H), and the like.

The broadcast receiving module 111 may be configured to receive digital broadcast signals transmitted from various types of broadcast systems. Such broadcast systems may include Digital Multimedia Broadcasting-Terrestrial (DMB-T), Digital Multimedia Broadcasting-Satellite (DMB-S), Media Forward Link Only (MediaFLO), Digital Video Broadcast-Handheld (DVB-H), Integrated Services Digital Broadcast-Terrestrial (ISDB-T) and the like. The broadcast receiving module 111 may be configured to be suitable for every broadcast system transmitting broadcast signals as well as the digital broadcasting systems.

Broadcast signals and/or broadcast associated information received via the broadcast receiving module 111 may be stored in a suitable device, such as a memory 160.

The mobile communication module 112 transmits/receives wireless signals to/from at least one of network entities (e.g., base station, an external mobile terminal, a server, etc.) on a mobile communication network. Here, the wireless signals may include audio call signal, video (telephony) call signal, or various formats of data according to transmission/reception of text/multimedia messages.

The mobile communication module 112 may implement a video call mode and a voice call mode. The video call mode indicates a state of calling with watching a callee's image. The voice call mode indicates a state of calling without watching the callee's image. The wireless communication module 112 may transmit and receive at least one of voice and image in order to implement the video call mode and the voice call mode.

The wireless Internet module 113 supports wireless Internet access for the mobile terminal. This module may be internally or externally coupled to the mobile terminal 100. Examples of such wireless Internet access may include Wireless LAN (WLAN) (Wi-Fi), Wireless Broadband (Wibro), Worldwide Interoperability for Microwave Access (Wimax), High Speed Downlink Packet Access (HSDPA) and the like.

The short-range communication module 114 denotes a module for short-range communications. Suitable technologies for implementing this module may include BLUETOOTH™, Radio Frequency IDentification (RFID), Infrared Data Association (IrDA), Ultra-WideBand (UWB), ZigBee™, Near Field Communication (NFC) and the like.

The location information module 115 denotes a module for detecting or calculating a position of a mobile terminal. An example of the location information module 115 may include a Global Position System (GPS) module or a wireless fidelity (WiFi) module.

Still referring to FIG. 1, the A/V input unit 120 is configured to provide audio or video signal input to the mobile terminal. The A/V input unit 120 may include a camera 121 and a microphone 122. The camera 121 receives and processes image frames of still pictures or video obtained by image sensors in a video call mode or a capturing mode. The processed image frames may be displayed on a display unit 151.

The image frames processed by the camera 121 may be stored in the memory 160 or transmitted to the exterior via the wireless communication unit 110. Also, user's position information and the like may be calculated from the image frames acquired by the camera 121. Two or more cameras 121 may be provided according to the configuration of the mobile terminal.

The microphone 122 may receive an external audio signal while the mobile terminal is in a particular mode, such as a phone call mode, a recording mode, a voice recognition mode, or the like. This audio signal is processed into digital data. The processed digital data is converted for output into a format transmittable to a mobile communication base station via the mobile communication module 112 in case of the phone call mode. The microphone 122 may include assorted noise removing algorithms to remove noise generated in the course of receiving the external audio signal.

The user input unit 130 may generate input data input by a user to control the operation of the mobile terminal. The user input unit 130 may include a keypad, a dome switch, a touchpad (e.g., static pressure/capacitance), a jog wheel, a jog switch and the like.

The sensing unit 140 provides status measurements of various aspects of the mobile terminal. For instance, the sensing unit 140 may detect an open/close status of the mobile terminal, a change in a location of the mobile terminal 100, a presence or absence of user contact with the mobile terminal 100, the location of the mobile terminal 100, acceleration/deceleration of the mobile terminal 100, and the like, so as to generate a sensing signal for controlling the operation of the mobile terminal 100. For example, regarding a slide-type mobile terminal, the sensing unit 140 may sense whether a sliding portion of the mobile terminal is open or closed. Other examples include sensing functions, such as the sensing unit 140 sensing the presence or absence of power provided by the power supply 190, the presence or absence of a coupling or other connection between the interface unit 170 and an external device.

The output unit 150 is configured to output an audio signal, a video signal or a tactile signal. The output unit 150 may include a display unit 151, an audio output module 153, an alarm unit 154 and a haptic module 155.

The display unit 151 may output information processed in the mobile terminal 100. For example, when the mobile terminal is operating in a phone call mode, the display unit 151 will provide a User Interface (UI) or a Graphic User Interface (GUI), which includes information associated with the call. As another example, if the mobile terminal is in a video call mode or a capturing mode, the display unit 151 may additionally or alternatively display images captured and/or received, UI**,** or GUI.

The display unit 151 may be implemented using, for example, at least one of a Liquid Crystal Display (LCD), a Thin Film Transistor-Liquid Crystal Display (TFT-LCD), an Organic Light-Emitting Diode (OLED), a flexible display, a three-dimensional (3D) display, an e-ink display or the like.

Some of such displays 151 may be implemented as a transparent type or an optical transparent type through which the exterior is visible, which is referred to as 'transparent display'. A representative example of the transparent display may include a Transparent OLED (TOLED), and the like.

The display unit 151 may also be implemented as a stereoscopic display unit 152 for displaying stereoscopic images.

Here, the stereoscopic image may be a three-dimensional (3D) stereoscopic image, and the 3D stereoscopic image is an image refers to an image making a viewer feel that a gradual depth and reality of an object on a monitor or a screen is the same as a reality space. A 3D stereoscopic image is implemented by using binocular disparity. Binocular disparity refers to disparity made by the positions of two eyes. When two eyes view different 2D images, the images are transferred to the brain through the retina and combined in the brain to provide the perception of depth and reality sense.

The stereoscopic display unit 152 may employ a stereoscopic display scheme such as stereoscopic scheme (a glass scheme), an auto-stereoscopic scheme (glassless scheme), a projection scheme (holographic scheme), or the like. Stereoscopic schemes commonly used for home television receivers, or the like, include Wheatstone stereoscopic scheme, or the like.

The auto-stereoscopic scheme includes, for example, a parallax barrier scheme, a lenticular scheme, an integral imaging scheme, a switchable scheme, or the like. The projection scheme includes a reflective holographic scheme, a transmissive holographic scheme, or the like.

In general, a 3D stereoscopic image is comprised of a left image (a left eye image) and a right image (a right eye image). According to how left and right images are combined into a 3D stereoscopic image, the 3D stereoscopic imaging method is divided into a top-down method in which left and right images are disposed up and down in a frame, an L-to-R (left-to-right, side by side) method in which left and right images are disposed left and right in a frame, a checker board method in which fragments of left and right images are disposed in a tile form, an interlaced method in which left and right images are alternately disposed by columns and rows, and a time sequential (or frame by frame) method in which left and right images are alternately displayed by time.

Also, as for a 3D thumbnail image, a left image thumbnail and a right image thumbnail are generated from a left image and a right image of the original image frame, respectively, and then combined to generate a single 3D thumbnail image. In general, thumbnail refers to a reduced image or a reduced still image. The thusly generated left image thumbnail and the right image thumbnail are displayed with a horizontal distance difference therebetween by a depth corresponding to the disparity between the left image and the right image on the screen, providing a stereoscopic space sense.

As illustrated, a left image and a right image required for implementing a 3D stereoscopic image is displayed on the stereoscopic display unit 152 by a stereoscopic processing unit (not shown). The stereoscopic processing unit may receive the 3D image and extract the left image and the right image, or may receive the 2D image and change it into a left image and a right image.

Here, if the display unit 151 and a touch sensitive sensor (referred to as a touch sensor) have a layered structure therebetween (referred to as a 'touch screen'), the display unit 151 may be used as an input device as well as an output device. The touch sensor may be implemented as a touch film, a touch sheet, a touchpad, and the like.

The touch sensor may be configured to convert changes of a pressure applied to a specific part of the display unit 151, or a capacitance occurring from a specific part of the display unit 151, into electric input signals. Also, the touch sensor may be configured to sense not only a touched position and a touched area, but also touch pressure. Here, a touch object is an object to apply a touch input onto the touch sensor. Examples of the touch object may include a finger, a touch pen, a stylus pen, a pointer or the like.

When touch inputs are sensed by the touch sensors, corresponding signals are transmitted to a touch controller. The touch controller processes the received signals, and then transmits corresponding data to the controller 180. Accordingly, the controller 180 may sense which region of the display unit 151 has been touched.

Still referring to FIG. 1, a proximity sensor 141 may be arranged at an inner region of the mobile terminal 100 covered by the touch screen, or near the touch screen. The proximity sensor 141 may be provided as one example of the sensing unit 140. The proximity sensor 141 indicates a sensor to sense presence or absence of an object approaching to a surface to be sensed, or an object disposed near a surface to be sensed, by using an electromagnetic field or infrared rays without a mechanical contact. The proximity sensor 141 has a longer lifespan and a more enhanced utility than a contact sensor.

The proximity sensor 141 may include a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on. When the touch screen is implemented as a capacitance type, proximity of a pointer to the touch screen is sensed by changes of an electromagnetic field. In this case, the touch screen (touch sensor) may be categorized into a proximity sensor.

Hereinafter, for the sake of brief explanation, a status that the pointer is positioned to be proximate onto the touch screen without contact will be referred to as 'proximity touch', whereas a status that the pointer substantially comes in contact with the touch screen will be referred to as 'contact touch'. For the position corresponding to the proximity touch of the pointer on the touch screen, such position corresponds to a position where the pointer faces perpendicular to the touch screen upon the proximity touch of the pointer.

The proximity sensor 141 senses proximity touch, and proximity touch patterns (e.g., distance, direction, speed, time, position, moving status, etc.). Information relating to the sensed proximity touch and the sensed proximity touch patterns may be output onto the touch screen.

When a touch sensor is overlaid on the stereoscopic display unit 152 in a layered manner (hereinafter, referred to as 'stereoscopic touch screen'), or when the stereoscopic display unit 152 and a 3D sensor sensing a touch operation are combined, the stereoscopic display unit 152 may also be used as a 3D input device.

As examples of the 3D sensor, the sensing unit 140 may include a proximity sensor 141, a stereoscopic touch sensing unit 142, an ultrasonic sensing unit 143, and a camera sensing unit 144.

The proximity sensor 141 detects the distance between a sensing object (e.g., the user's finger or a stylus pen) applying a touch by using the force of electromagnetism or infrared rays without a mechanical contact and a detect surface. By using the distance, the terminal recognizes which portion of a stereoscopic image has been touched. In particular, when the touch screen is an electrostatic touch screen, the degree of proximity of the sensing object is detected based on a change of an electric field according to proximity of the sensing object, and a touch to the 3D image is recognized by using the degree of proximity.

The stereoscopic touch sensing unit 142 is configured to detect the strength or duration of a touch applied to the touch screen. For example, the stereoscopic touch sensing unit 142 may sense touch pressure. When the pressure is strong, it may recognize the touch as a touch with respect to an object located farther away from the touch screen toward the inside of the terminal.

The ultrasonic sensing unit 143 is configured to recognize position information of the sensing object by using ultrasonic waves.

The ultrasonic sensing unit 143 may include, for example, an optical sensor and a plurality of ultrasonic sensors. The optical sensor is configured to sense light and the ultrasonic sensors may be configured to sense ultrasonic waves. Since light is much faster than ultrasonic waves, a time for which the light reaches the optical sensor is much shorter than a time for which the ultrasonic wave reaches the ultrasonic sensor. Therefore, a position of a wave generation source may be calculated by using a time difference from the time that the ultrasonic wave reaches based on the light as a reference signal.

The camera sensing unit 144 includes at least one of a camera 121, a photo sensor, and a laser sensor.

For example, the camera 121 and the laser sensor may be combined to detect a touch of the sensing object with respect to a 3D stereoscopic image. When distance information detected by a laser sensor is added to a 2D image captured by the camera, 3D information can be obtained.

In another example, a photo sensor may be laminated on the display device. The photo sensor is configured to scan a movement of the sensing object in proximity to the touch screen. In detail, the photo sensor includes photo diodes and transistors at rows and columns to scan content mounted on the photo sensor by using an electrical signal changing according to the quantity of applied light. Namely, the photo sensor calculates the coordinates of the sensing object according to variation of light to thus obtain position information of the sensing object.

The audio output module 153 may convert and output as sound audio data received from the wireless communication unit 110 or stored in the memory 160 in a call signal reception mode, a call mode, a record mode, a voice recognition mode, a broadcast reception mode, and the like. Also, the audio output module 153 may provide audible outputs related to a particular function performed by the mobile terminal 100 (e.g., a call signal reception sound, a message reception sound, etc.). The audio output module 153 may include a speaker, a buzzer or the like.

The alarm unit 154 outputs a signal for informing about an occurrence of an event of the mobile terminal 100. Events generated in the mobile terminal may include call signal reception, message reception, key signal inputs, a touch input etc. In addition to video or audio signals, the alarm unit 154 may output signals in a different manner, for example, using vibration to inform about an occurrence of an event. The video or audio signals may be also outputted via the audio output module 153, so the display unit 151 and the audio output module 153 may be classified as parts of the alarm unit 154.

A haptic module 155 generates various tactile effects the user may feel. A typical example of the tactile effects generated by the haptic module 155 is vibration. The strength and pattern of the haptic module 155 can be controlled. For example, different vibrations may be combined to be outputted or sequentially outputted.

Besides vibration, the haptic module 155 may generate various other tactile effects such as an effect by stimulation such as a pin arrangement vertically moving with respect to a contact skin, a spray force or suction force of air through a jet orifice or a suction opening, a contact on the skin, a contact of an electrode, electrostatic force, etc., an effect by reproducing the sense of cold and warmth using an element that can absorb or generate heat.

The haptic module 155 may be implemented to allow the user to feel a tactile effect through a muscle sensation such as fingers or arm of the user, as well as transferring the tactile effect through a direct contact. Two or more haptic modules 155 may be provided according to the configuration of the mobile terminal 100.

The memory 160 may store software programs used for the processing and controlling operations performed by the controller 180, or may temporarily store data (e.g., a phonebook, messages, still images, video, etc.) that are inputted or outputted. In addition, the memory 160 may store data regarding various patterns of vibrations and audio signals outputted when a touch is inputted to the touch screen.

The memory 160 may include at least one type of storage medium including a Flash memory, a hard disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the mobile terminal 100 may be operated in relation to a web storage device that performs the storage function of the memory 160 over the Internet.

The interface unit 170 serves as an interface with every external device connected with the mobile terminal 100. For example, the external devices may transmit data to an external device, receives and transmits power to each element of the mobile terminal 100, or transmits internal data of the mobile terminal 100 to an external device. For example, the interface unit 170 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating the authority of using the mobile terminal 100 and may include a user identity module (UIM), a subscriber identity module (SIM) a universal subscriber identity module (USIM), and the like. In addition, the device having the identification module (referred to as 'identifying device', hereinafter) may take the form of a smart card. Accordingly, the identifying device may be connected with the terminal 100 via the interface unit 170.

When the mobile terminal 100 is connected with an external cradle, the interface unit 170 may serve as a passage to allow power from the cradle to be supplied therethrough to the mobile terminal 100 or may serve as a passage to allow various command signals inputted by the user from the cradle to be transferred to the mobile terminal therethrough. Various command signals or power inputted from the cradle may operate as signals for recognizing that the mobile terminal is properly mounted on the cradle.

The controller 180 typically controls the general operations of the mobile terminal. For example, the controller 180 performs controlling and processing associated with voice calls, data communications, video calls, and the like. The controller 180 may include a multimedia module 181 for reproducing multimedia data. The multimedia module 181 may be configured within the controller 180 or may be configured to be separated from the controller 180.

The controller 180 may perform a pattern recognition processing to recognize a handwriting input or a picture drawing input performed on the touch screen as characters or images, respectively.

Also, the controller 180 may execute a lock state to restrict a user from inputting control commands for applications when a state of the mobile terminal meets a preset condition. Also, the controller 180 may control a lock screen displayed in the lock state based on a touch input sensed on the display unit 151 in the lock state of the mobile terminal.

The power supply unit 190 receives external power or internal power and supplies appropriate power required for operating respective elements and components under the control of the controller 180.

Various embodiments described herein may be implemented in a computer-readable or its similar medium using, for example, software, hardware, or any combination thereof.

For hardware implementation, the embodiments described herein may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic units designed to perform the functions described herein. In some cases, such embodiments may be implemented by the controller 180 itself.

For software implementation, the embodiments such as procedures or functions described herein may be implemented by separate software modules. Each software module may perform one or more functions or operations described herein.

Software codes can be implemented by a software application written in any suitable programming language. The software codes may be stored in the memory 160 and executed by the controller 180.

Hereinafter, a communication system which is operable with the mobile terminal 100 according to the present disclosure will be described.

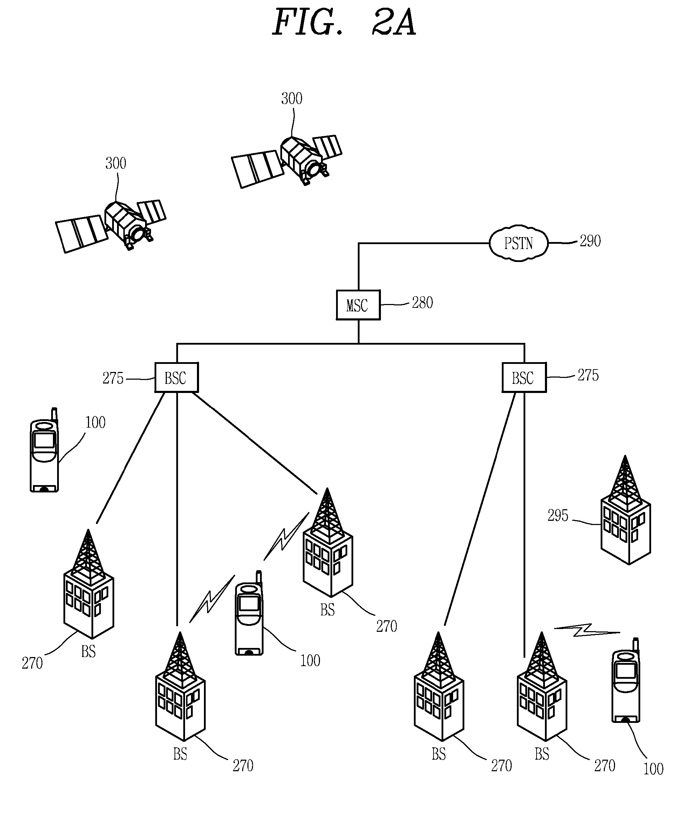

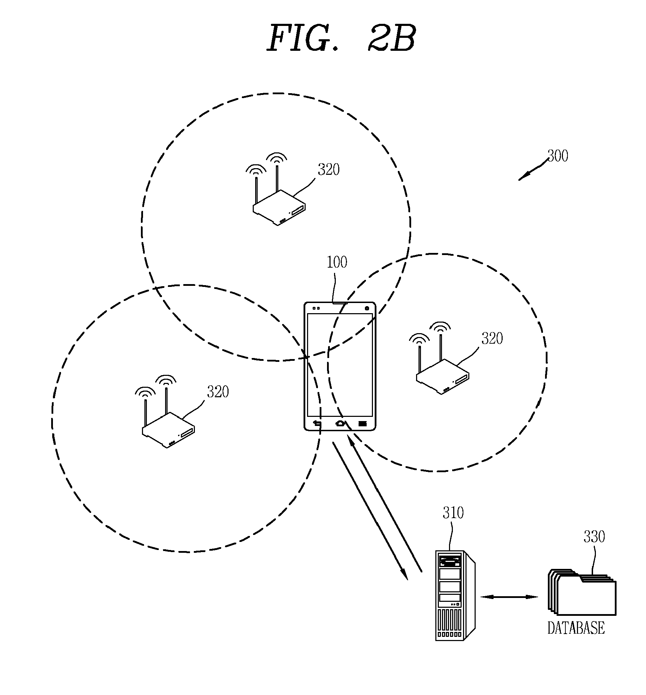

FIGS. 2A and 2B are conceptual views of a communication system operable with a mobile terminal 100 in accordance with the present disclosure.

First, referring to FIG. 2A, such communication systems utilize different air interfaces and/or physical layers. Examples of such air interfaces utilized by the communication systems include Frequency Division Multiple Access (FDMA), Time Division Multiple Access (TDMA), Code Division Multiple Access (CDMA), and Universal Mobile Telecommunications System (UMTS), the Long Term Evolution (LTE) of the UMTS, the Global System for Mobile Communications (GSM), and the like.

By way of non-limiting example only, further description will relate to a CDMA communication system, but such teachings apply equally to other system types including the CDMA wireless communication system.

Referring now to FIG. 2A, a CDMA wireless communication system is shown having a plurality of mobile terminals 100, a plurality of base stations (BSs) 270, base station controllers (BSCs) 275, and a mobile switching center (MSC) 280. The MSC 280 is configured to interface with a conventional Public Switch Telephone Network (PSTN) 290. The MSC 280 is also configured to interface with the BSCs 275. The BSCs 275 are coupled to the base stations 270 via backhaul lines. The backhaul lines may be configured in accordance with any of several known interfaces including, for example, E1/T1, ATM, IP, PPP, Frame Relay, HDSL, ADSL, or xDSL. Hence, the plurality of BSCs 275 can be included in the system as shown in FIG. 2A.

Each base station 270 may include one or more sectors, each sector having an omni-directional antenna or an antenna pointed in a particular direction radially away from the base station 270. Alternatively, each sector may include two or more different antennas. Each base station 270 may be configured to support a plurality of frequency assignments, with each frequency assignment having a particular spectrum (e.g., 1.25 MHz, 5 MHz, etc.).

The intersection of sector and frequency assignment may be referred to as a CDMA channel. The base stations 270 may also be referred to as Base Station Transceiver Subsystems (BTSs). In some cases, the term "base station" may be used to refer collectively to a BSC 275, and one or more base stations 270. The base stations may also be denoted as "cell sites." Alternatively, individual sectors of a given base station 270 may be referred to as cell sites.

A broadcasting transmitter (BT) 295, as shown in FIG. 2A, transmits a broadcast signal to the mobile terminals 100 operating within the system. The broadcast receiving module 111 (FIG. 1) is typically configured inside the mobile terminal 100 to receive broadcast signals transmitted by the BT 295.

FIG. 2A further depicts several Global Positioning System (GPS) satellites 300. Such satellites 300 facilitate locating the position of at least one of plural mobile terminals 100. Two satellites are depicted in FIG. 2A, but it is understood that useful position information may be obtained with greater or fewer satellites than two satellites. The GPS module 115 (FIG. 1) is typically configured to cooperate with the satellites 300 to obtain desired position information. It is to be appreciated that other types of position detection technology, (i.e., location technology that may be used in addition to or instead of GPS location technology) may alternatively be implemented. If desired, at least one of the GPS satellites 300 may alternatively or additionally be configured to provide satellite DMB transmissions.

During typical operation of the wireless communication system, the base stations 270 receive sets of reverse-link signals from various mobile terminals 100. The mobile terminals 100 are engaging in calls, messaging, and executing other communications. Each reverse-link signal received by a given base station 270 is processed within that base station 270. The resulting data is forwarded to an associated BSC 275. The BSC 275 provides call resource allocation and mobility management functionality including the orchestration of soft handoffs between base stations 270. The BSCs 275 also route the received data to the MSC 280, which then provides additional routing services for interfacing with the PSTN 290. Similarly, the PSTN 290 interfaces with the MSC 280, and the MSC 280 interfaces with the BSCs 275, which in turn control the base stations 270 to transmit sets of forward-link signals to the mobile terminals 100.

Hereinafter, description will be given of a method for acquiring location information of a mobile terminal using a wireless fidelity (WiFi) positioning system (WPS), with reference to FIG. 2B.

The WiFi positioning system (WPS) 300 refers to a location determination technology based on a wireless local area network (WLAN) using WiFi as a technology for tracking the location of the mobile terminal 100 using a WiFi module provided in the mobile terminal 100 and a wireless access point 320 for transmitting and receiving to and from the WiFi module.

The WiFi positioning system 300 may include a WiFi location determination server 310, a mobile terminal 100, a wireless access point (AP) 320 connected to the mobile terminal 100, and a database 330 stored with any wireless AP information.

The WiFi location determination server 310 extracts the information of the wireless AP 320 connected to the mobile terminal 100 based on a location information request message (or signal) of the mobile terminal 100. The information of the wireless AP 320 may be transmitted to the WiFi location determination server 310 through the mobile terminal 100 or transmitted to the WiFi location determination server 310 from the wireless AP 320.

The information of the wireless AP extracted based on the location information request message of the mobile terminal 100 may be at least one of MAC address, SSID, RSSI, channel information, privacy, network type, signal strength and noise strength.

The WiFi location determination server 310 receives the information of the wireless AP 320 connected to the mobile terminal 100 as described above, and compares the received wireless AP 320 information with information contained in the pre-established database 330 to extract (or analyze) the location information of the mobile terminal 100.

On the other hand, referring to FIG. 2B, as an example, the wireless AP connected to the mobile terminal 100 is illustrated as a first, a second, and a third wireless AP 320. However, the number of wireless APs connected to the mobile terminal 100 may be changed in various ways according to a wireless communication environment in which the mobile terminal 100 is located. When the mobile terminal 100 is connected to at least one of wireless APs, the WiFi positioning system 300 can track the location of the mobile terminal 100.

Next, considering the database 330 stored with any wireless AP information in more detail, various information of any wireless APs disposed at different locations may be stored in the database 330.

The information of any wireless APs stored in the database 330 may be information such as MAC address, SSID, RSSI, channel information, privacy, network type, latitude and longitude coordinate, building at which the wireless AP is located, floor number, detailed indoor location information (GPS coordinate available), AP owner's address, phone number, and the like.

In this manner, any wireless AP information and location information corresponding to the any wireless AP are stored together in the database 330, and thus the WiFi location determination server 310 may retrieve wireless AP information corresponding to the information of the wireless AP 320 connected to the mobile terminal 100 from the database 330 to extract the location information matched to the searched wireless AP, thereby extracting the location information of the mobile terminal 100.

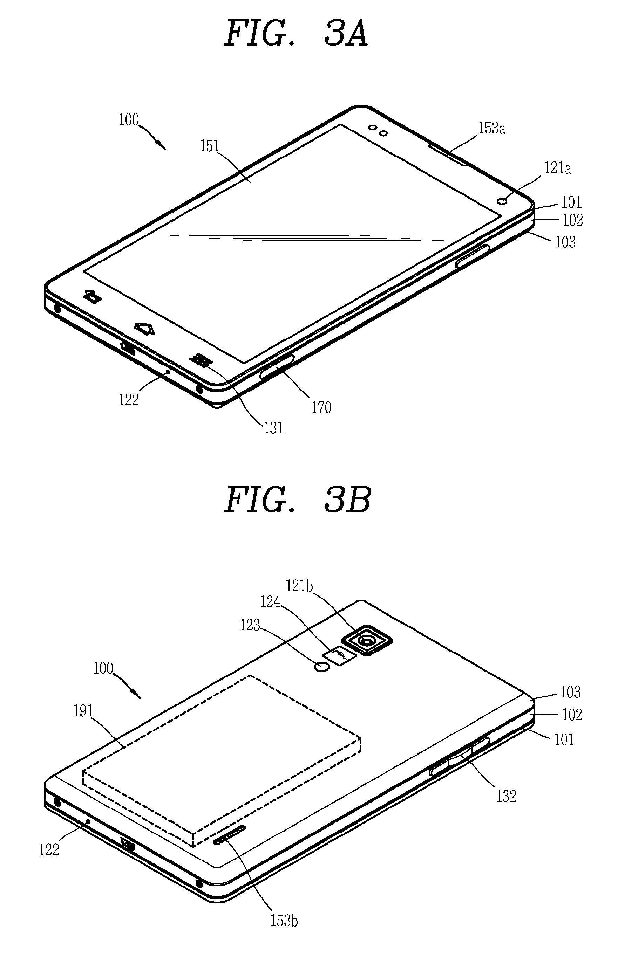

FIG. 3A is a front perspective view of the mobile terminal 100 according to an embodiment of the present invention.

The mobile terminal 100 according to the present disclosure is a bar type mobile terminal. However, the present disclosure is not limited to this, but may be applied to a watch type, a clip type, a glasses type, or a slide type in which two or more bodies are coupled to each other so as to perform a relative motion, a folder type, or a swing type, a swivel type and the like.

A case (casing, housing, cover, etc.) forming an outer appearance of the body may include a front case 101 and a rear case 102. A space formed by the front case 101 and the rear case 102 may accommodate various components therein. At least one intermediate case may further be disposed between the front case 101 and the rear case 102. A battery cover 103 for covering a battery 191 may be detachably mounted to the rear case 102.

Such cases may be formed by injection-molded synthetic resin, or may be formed using a metallic material such as stainless steel (STS) or titanium (Ti).

At the front case 101, may be disposed a display unit 151, a first audio output unit 153a, a first camera 121 a, a first user input unit 131, etc. On the side surfaces, may be disposed a microphone 122, an interface unit 170, a second user input unit 132, etc.

The display unit 151 may output information processed in the mobile terminal 100. The display unit 151 may be implemented using, for example, at least one of a Liquid Crystal Display (LCD), a Thin Film Transistor-Liquid Crystal Display (TFT-LCD), an Organic Light-Emitting Diode (OLED), a flexible display, a three-dimensional (3D) display, an e-ink display or the like.

The display unit 151 may include a touch sensing means to receive a control command by a touch method. When a touch is made to any one place on the display unit 151, the touch sensing means may be configured to sense this touch and enter the content corresponding to the touched place. The content entered by a touch method may be a text or numerical value, or a menu item capable of indication or designation in various modes.

The touch sensing means may be formed with transparency to allow visual information displayed on the display unit 151 to be seen, and may include a structure for enhancing the visibility of a touch screen at bright places. Referring to FIG. 3A, the display unit 151 occupies a most portion of the front surface of the front case 101.

The first audio output unit 153a and the first camera 121 a are disposed in a region adjacent to one of both ends of the display unit 151, and the first manipulation input unit 131 and the microphone 122 are disposed in a region adjacent to the other end thereof. The second manipulation interface 132 (refer to FIG. 3B), the interface 170, and the like may be disposed on a lateral surface of the terminal body.

The first audio output module 153a may be implemented in the form of a receiver for transferring voice sounds to the user's ear or a loud speaker for outputting various alarm sounds or multimedia reproduction sounds.

It may be configured such that the sounds generated from the first audio output module 153a are released along an assembly gap between the structural bodies. In this case, a hole independently formed to output audio sounds may not be seen or hidden in terms of appearance, thereby further simplifying the appearance of the mobile terminal 100. However, the present invention may not be limited to this, but a hole for releasing the sounds may be formed on the window.

The first camera 121 a processes video frames such as still or moving images obtained by the image sensor in a video call mode or capture mode. The processed video frames may be displayed on the display unit 151.

The user input unit 130 is manipulated to receive a command for controlling the operation of the mobile terminal 100. The user input unit 130 may include a first and a second manipulation unit 131, 132. The first and the second manipulation unit 131, 132 may be commonly referred to as a manipulating portion, and any method may be employed if it is a tactile manner allowing the user to perform manipulation with a tactile feeling such as touch, push, scroll or the like.

In the present drawing, it is illustrated on the basis that the first manipulation unit 131 is a touch key, but the present disclosure may not be necessarily limited to this. For example, the first manipulation unit 131 may be configured with a mechanical key, or a combination of a touch key and a mechanical key.

The content received by the first and/or second manipulation units 131, 132 may be set in various ways. For example, the first manipulation unit 131 may be used to receive a command such as menu, home key, cancel, search, or the like, and the second manipulation unit 132 may receive a command, such as controlling a volume level being outputted from the first audio output module 153a, or switching into a touch recognition mode of the display unit 151.

The microphone 122 may be formed to receive the user's voice, other sounds, or the like. The microphone 122 may be provided at a plurality of places, and configured to receive stereo sounds.

The interface unit 170 serves as a path allowing the mobile terminal 100 to exchange data with external devices. For example, the interface unit 170 may be at least one of a connection terminal for connecting to an earphone in a wired or wireless manner, a port for near field communication (for example, an Infrared Data Association (IrDA) port, a Bluetooth port, a wireless LAN port, and the like), and a power supply terminal for supplying power to the mobile terminal 100. The interface unit 170 may be implemented in the form of a socket for accommodating an external card such as Subscriber Identification Module (SIM) or User Identity Module (UIM), and a memory card for information storage.

FIG. 3B is a rear perspective view illustrating mobile terminal 100 illustrated in FIG. 3A.

Referring to FIG. 3B, a second camera 121 b may be additionally mounted at a rear surface of the terminal body, namely, the rear case 102. The second camera 121b has an image capturing direction, which is substantially opposite to the direction of the first camera unit 121 a (refer to FIG. 3A), and may have a different number of pixels from that of the first camera unit 121 a.

For example, it is preferable that the first camera 121 a has a relatively small number of pixels enough not to cause difficulty when the user captures his or her own face and sends it to the other party during a video call or the like, and the second camera 121b has a relatively large number of pixels since the user often captures a general object that is not sent immediately. The first and the second camera 121 a, 121b may be provided in the terminal body in a rotatable and popupable manner.

Furthermore, a flash 123 and a mirror 124 may be additionally disposed adjacent to the second camera 121b. The flash 123 illuminates light toward an object when capturing the object with the second camera 121b. The mirror 124 allows the user to look at his or her own face, or the like, in a reflected way when capturing himself or herself (in a self-portrait mode) by using the second camera 121 b.

A second audio output unit 153b may be additionally disposed at a rear surface of the terminal body. The second audio output unit 153b together with the first audio output unit 153a (refer to FIG. 3A) can implement a stereo function, and may be also used to implement a speaker phone mode during a phone call.

An antenna (not shown) for receiving broadcast signals may be additionally disposed at a lateral surface of the terminal body in addition to an antenna for making a phone call or the like. The antenna constituting part of the broadcast receiving module 111 (refer to FIG. 1) may be provided in the terminal body in a retractable manner.

A power supply unit 190 (refer to FIG. 1) for supplying power to the mobile terminal 100 may be mounted on the terminal body. The power supply unit 190 may be incorporated into the terminal body, or may include a battery 191 configured in a detachable manner on the outside of the terminal body. According to the drawing, it is illustrated that the battery cover 103 is combined with the rear case 102 to cover the battery 191, thereby restricting the battery 191 from being released and protecting the battery 191 from external shocks and foreign substances.

Meanwhile, when the main body of the mobile terminal is moved, the display unit 151 in a non-activated state according to the exemplary embodiment outputs predetermined screen information. Here, "the non-activated state of the display unit 151" means a state in which an illumination provided inside the mobile terminal to illuminate the display unit 151 is off. That is, any information or graphic image is not displayed on the display unit 151 in the state in which the display unit 151 is non-activated.

When the display unit 151 is in the non-activated state, the controller 180 may control the sensing unit 140 to sense movement of the main body of the mobile terminal. When the movement is sensed, the controller 180 may output screen information on the display unit 151 or convert the non-activated state of the display unit 151 into an activated state.

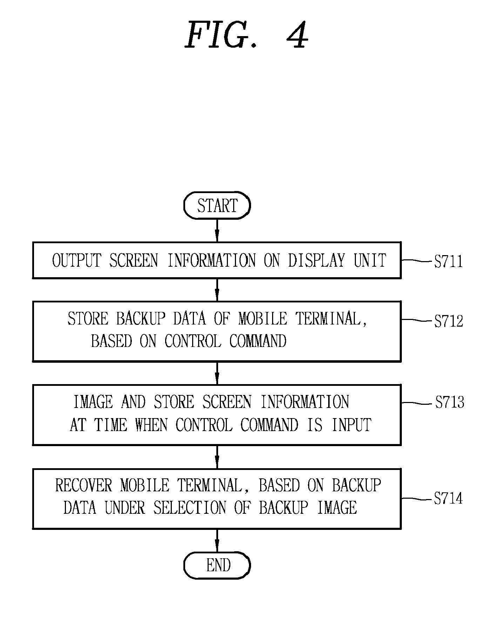

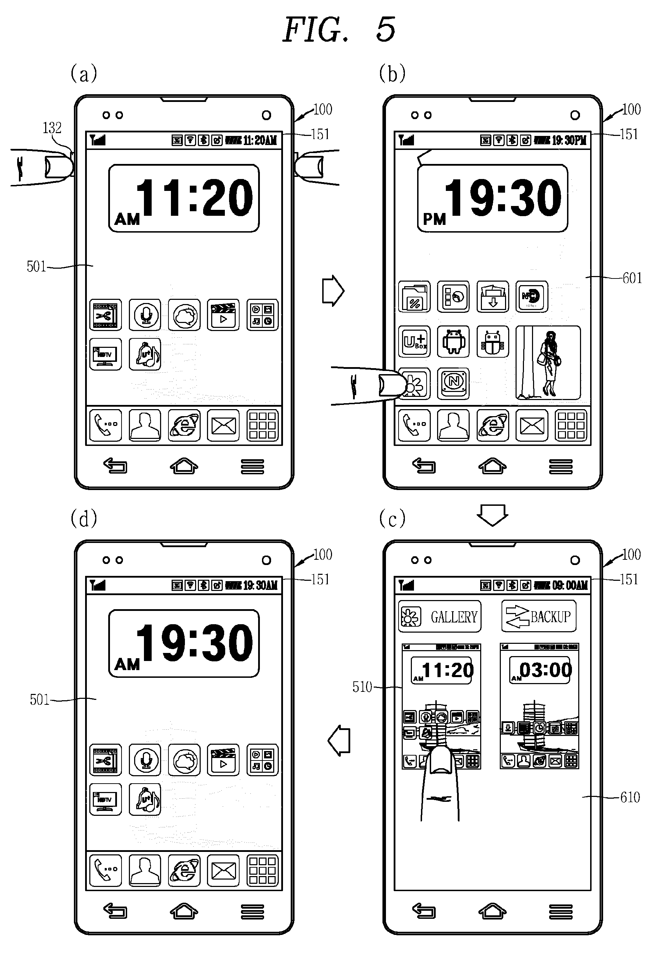

FIG. 4 is a flowchart illustrating a method for controlling the mobile terminal according to an exemplary embodiment. FIG. 5 is a conceptual view illustrating the method of FIG. 4.

The display unit 151 outputs first screen information 501 (S711). The screen information may correspond to a home screen page, an execution screen of an application, an image, a reproduction screen of a moving image, etc. That is, the kind of the first screen information 501 is not limited.

The controller 180 stores backup data of the mobile terminal, based on a control command input to the mobile terminal (S712). The backup data may include all information applied to the mobile terminal when the control command is input. For example, the controller 180 stores, as the backup data, various contents (e.g., telephone numbers, stored memos, media files and image files) stored in the memory 160, installed applications, data stored in a storage space of each application, and various settings of the mobile terminal, stored by a user.

The data stored in the storage space of each application may include data stored by the user while the application is being executed or stored by a received event, settings included in the application, and the like.

The various settings, for example, may include a layout for arranging icons and widgets of a home screen page output on the display unit 151, an image file set as a background screen of the home screen page, an informing method of an event set by the user, and the like.

That is, the backup data include data for allowing the mobile terminal to be driven at a time substantially identical to that when the control command is input.

The controller 180 images screen information at the time when the control command is input, and stores the screen information as a backup image (S713). The control command may correspond to a touch input applied to the display unit 151, a voice input through a microphone, an input through a user's hand applied to first and second manipulation units 131 and 132 of the mobile terminal, or the like. However, the present invention is not limited thereto, and the control command may be formed in various manners through a user's setting.

As not shown in FIG. 5, the controller 180 may form, as the backup data, only some information of the mobile terminal at the time when the control command is input, based on a user's setting. For example, if the control command is input when one home screen page is output on the display unit 151, the controller 180 may extract information included in the home screen page and form the extracted information as the backup data. For example, information of an application, corresponding to at least one icon included in the home screen page, and a layout of the home screen page may be formed as the backup data.

Referring to FIG. 5, the controller 180 controls the memory 160 to form the backup data, based on a control command input through the second manipulation unit 132, and form the first screen information 501 as a first backup image 510 (see FIG 5 (c)), so that the backup data and the first backup image 510 are stored together.

That is, the controller 180 captures the first screen information 510, based on the control command, and forms the captured screen information as the first backup image 510. That is, the control command for forming the backup data may be input regardless of screen information output on the display unit 151, and conveniently form the backup data even when the mobile terminal performs another function.

For example, if the control command is input in a state in which an execution screen of an application activated on the display unit 15 is output, the execution screen of the application is formed as the first backup image 510. The controller 180 controls the memory 160 to form and store, as the backup data, a state in which the application is activated and information stored in the mobile terminal when the application is activated.

The controller 180 forms the backup data and the first backup image 510 as one backup file, and stores the backup file in the memory 160. The backup file may include a date and time information when the control command is input.

The first backup image 510 is stored in a storage space of a gallery application, and the controller 180 controls the display unit 151 to output the first backup image 510 together with the backup data on an execution screen 610 of the gallery application. Here, the gallery application corresponds to a program for storing images obtained using various methods in the storage space and outputting the stored images. For example, when an external environment is obtained as an image by the camera 121, the controller 180 controls the memory 160 to store the image in the storage space of the gallery application.

When the first backup image 510 is formed together with the backup data, the controller 180 controls the memory 160 to store the first backup image 510 in the storage space of the gallery application.

Referring to FIGS. 5 (b) and (c), the controller 180 controls the display unit 151 to output the execution screen 610 of the application, based on a touch input applied to an icon of the gallery application. If the first backup image 510 is formed, the controller 180 forms, in the storage space of the gallery application, a storage space in which the first backup image 510 is stored. For example, the controller 180 may form a folder in which the first backup image 510 and control the display unit 151 to output at least one first backup image 510 when the folder is activated.

If the first backup image 510 is selected, the controller 180 recovers the mobile terminal, based on backup data matched to the first backup image 510 (S714). That is, the controller 180 recovers the mobile terminal to the state of the mobile terminal at the time when the selected first backup image 510 is stored, using the backup data.

Since the user can back up the mobile terminal and store the backup data even when the mobile terminal performs a specific function, it is possible to omit a procedure for blocking the specific function to backup the mobile terminal or executing a set backup program.

The backup data are stored together with the backup image representing screen information in the backup of the mobile terminal, and thus the user can identify the state of the mobile terminal when the mobile terminal is backed up through the backup image.

The backup data is stored together with the backup data in the storage space of the gallery application for storing images, and thus it is easy to perform access for selecting a backup image. Accordingly, the user can more easily perform a function of backing up and recovering the mobile terminal.

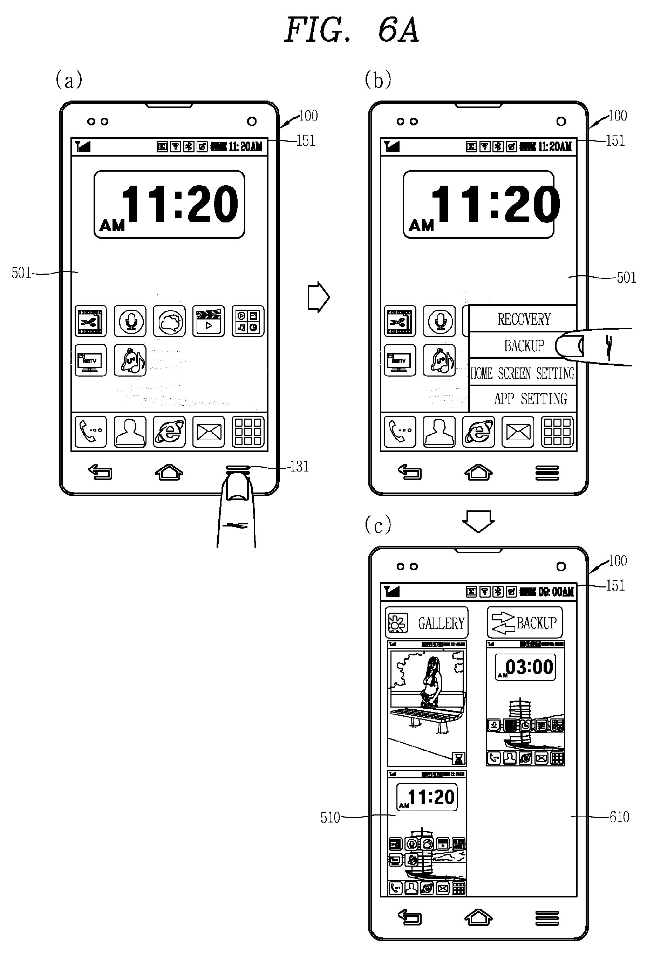

FIGS. 6A to 6D are conceptual views illustrating control methods for backing up the mobile terminal according to various exemplary embodiments.

A control method for performing a backup function in a state in which screen information is output will be described with reference to FIG. 6A.

Referring to FIGS. 6A (a) and (b), the controller 180 may control the display unit 151 to output a graphic image for executing backup, based on a touch input applied to the first manipulation unit 131 when the first screen information 501 is output.

For example, a menu image may be output by the first manipulation unit 131. The menu image may include a graphic image for changing a setting of the screen information, a graphic image for changing a setting of an application included in the screen information, a graphic image for performing a backup function, and a graphic image for performing a recovery function.

The controller 180 may back up the mobile terminal by applying a touch input to the menu image output by the first manipulation unit 131. That is, the user may back up the mobile terminal without converting the output screen information into another screen information.

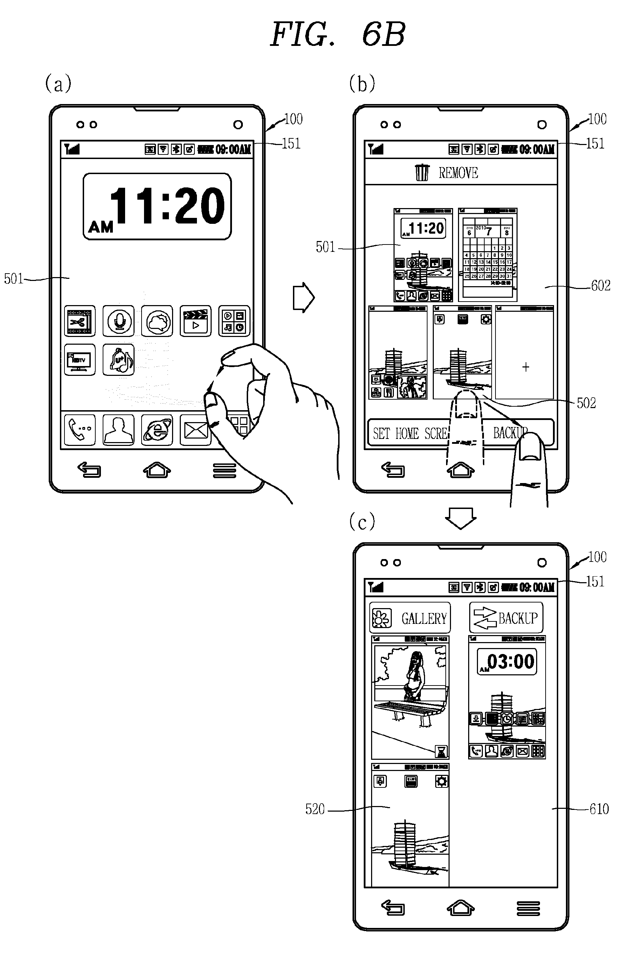

A control method for backing up the mobile terminal in an edition screen of a home screen page will be described with reference to FIG. 6B.

Referring to FIGS. 6B (a) and (b), the controller 180 controls the display unit 151 to output a first edition screen 602 of the home screen page, based on a touch input applied to the display unit 151 when the home screen page is output.

Here, the touch input may correspond to a touch input of a pinch-out type where two touch inputs move in directions close to each other on the display unit 151 on which the screen information is output.

The first edition screen 602 includes at least one home screen page. The controller 180 controls the display unit 151 to output the home screen pages together. The controller 180 may perform an output order of the home screen page, a setting of the home screen page as a basic page, a deletion of the home screen page, and the like, based on touch inputs respectively applied to the home screen pages.

The controller 180 forms backup data of the mobile terminal, based on the touch input applied to the home screen page. The controller 180 creates the backup file by forming, as the backup image, the home screen page to which the touch input is applied.

For example, the first edition screen 602 includes a backup graphic image for performing backup under a user's control command. The controller 180 may create the backup data through a touch input continuously applied from the home screen page to the graphic image (i.e., a touch input of a dragging type for moving the home screen page).

The controller 180 may back up the entire mobile terminal, based on the control command, but the present invention is not limited thereto. For example, the controller 180 may form, as the backup data, information included in a home screen page 502 to which the touch input is input.

The controller 180 may control the memory 160 to store the home screen page 502 as a second backup image 520.

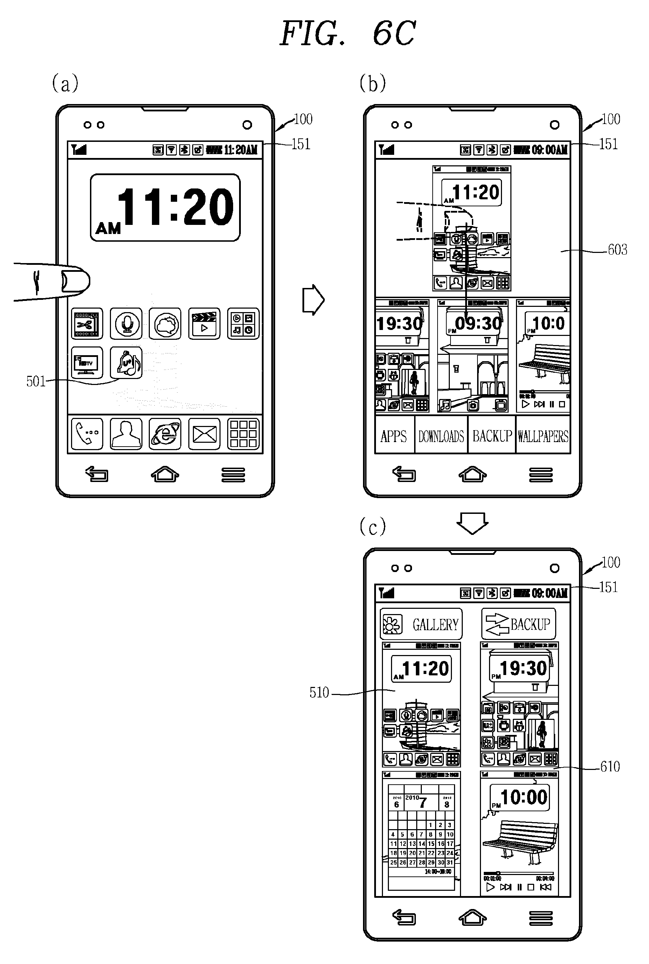

A control method for backing up the mobile terminal in an edition screen of a home screen page will be described with reference to FIG. 6C.

Referring to FIGS. 6C (a) and (b), the controller 180 outputs a second edition screen 603, based on a touch input applied to the display unit 151 when the first screen information 501 that is one home screen page is output.

The touch input may correspond to a long touch input applied to an area in which contents on the first screen information 510 are not displayed.

The user may add contents to the home screen page through the second edition screen 603. That is, the second edition screen 603 outputs at least one home screen page and outputs contents which can be added to the home screen page.

For example, the contents may include an icon of an application to be added to the home screen page, a widget, an image to be applied as a background screen of the home screen page, and the like. The controller 180 controls the display unit 151 to add the contents to the home screen page, based on a touch input continuously applied to the home screen page from the contents.

Meanwhile, the second edition screen 603 controls the display unit 151 to output a graphic image receiving a touch input for backing up the mobile terminal. For example, the second edition screen 603 includes a plurality of taps for classifying and outputting a plurality of contents, and may include a backup tap.

For example, the controller 180 may control the display unit 151 to output at least one previously stored backup image when the backup tap is activated.

The controller 180 forms backup data by backing up the mobile terminal, based on a touch input continuously applied to the backup tap from the home screen page. Here, the touch input corresponds to a touch input of the dragging type, and the controller 180 may back up the mobile terminal when the touch input is cancelled in one area on the display unit 151, corresponding to the backup tap.

The controller 180 controls the memory 160 to form, as a first backup image 510, the home screen page to which the touch input is applied, and store the first backup image 510.

The controller 180 controls the memory 160 to store the first backup image 510 in a backup storage space of the gallery application.

That is, the user may perform backup by applying a touch input to an edition screen, using a function for editing a home screen page output on the display unit 151. In addition, the user may form the home screen page as a backup image by applying a touch input to the edition screen.

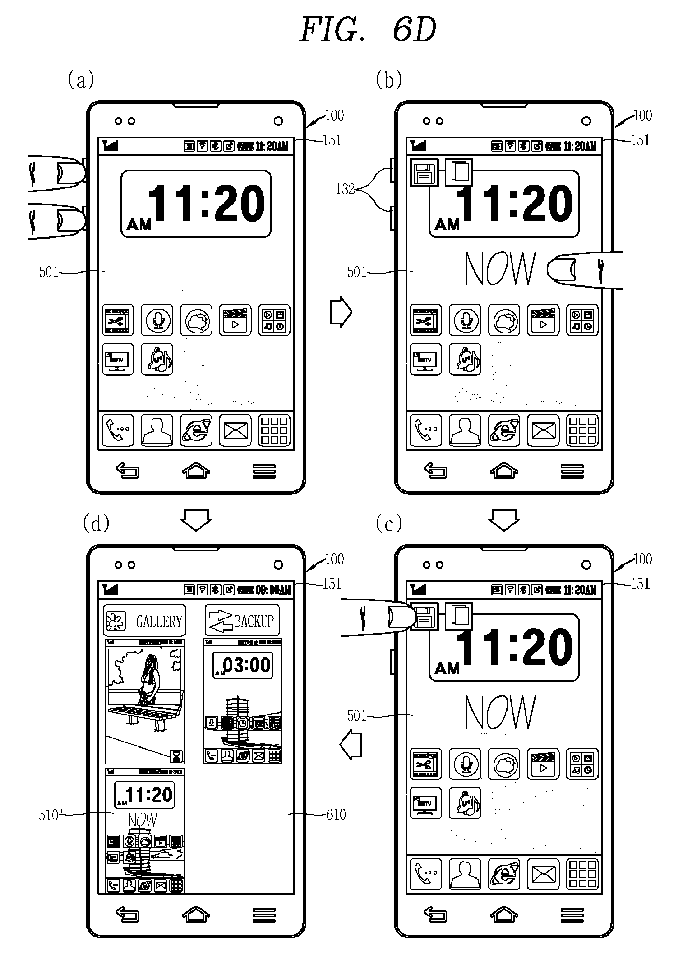

A control method for forming a backup image by forming an image on screen information will be described with reference to FIG. 6D.

Referring to FIGS. 6D (a) and (b), the controller 180 controls the display unit 151 to convert the state of the screen information into a memo state in which a memo can be input, based on a control command applied to the second manipulation unit 132.

If the state of the screen information is converted into the memo state, the controller 180 limits the control of the screen information, based on a touch input applied to the display unit 151. The controller 180 controls the display unit 151 to output a memo overlapped with the screen information, based on a trace of the touch input applied to the display unit 151. Here, the memo may correspond to a picture formed along the trace of the touch input, a text recorded along the trace, and the like.

If the memo state is activated, the controller 180 controls the display unit 151 to output an icon for displaying the memo state and a storage icon receiving a touch input for storing screen information and an image, output on the display unit 151 in the memo state.

The controller 180 forms backup data of the mobile terminal, based on a touch input applied to the storage icon, and forms a backup image 510' by imaging the image and the first screen information 501. Meanwhile, the controller 180 may control the memory 160 to store the screen information including the image as a general image, based on a touch input applied to the storage icon. Here, the general image is distinguished from the backup image. That is, although a touch input is applied to the general image, the mobile terminal is not recovered.

That is, the controller 180 may form backup data in the memo state, and form a backup image including screen information and a memo.

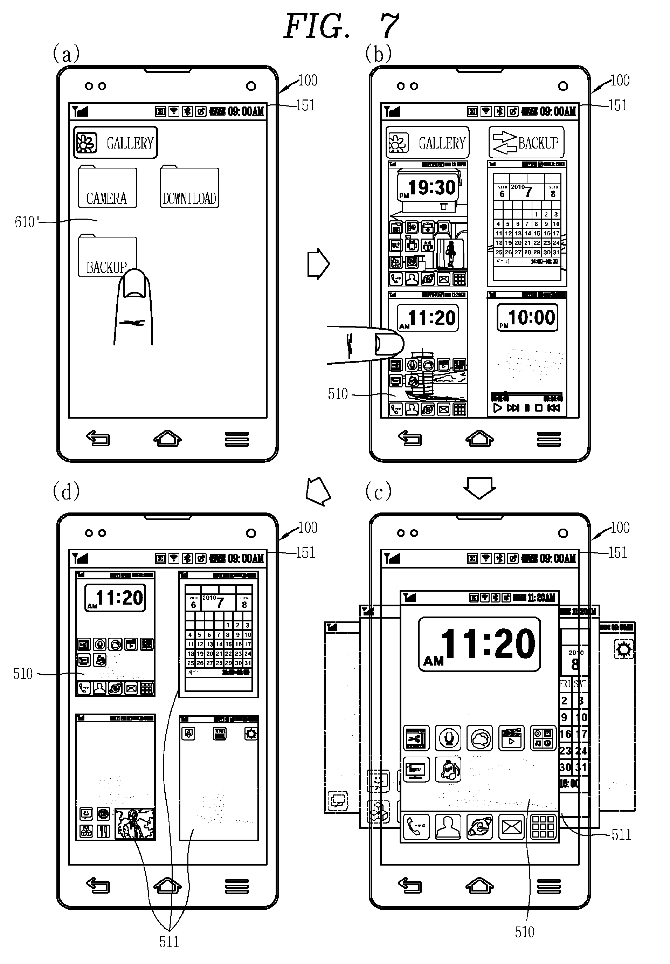

FIG. 7 is a conceptual view illustrating a control method for providing a plurality of home screen pages of backup data corresponding to a backup image.

FIG. 7 (a) is a view illustrating the display unit 151 outputting an execution screen 610' of the gallery application including a backup folder. The controller 180 controls the display unit 151 to output an execution screen 610 including at least one backup image, based on a touch input applied to the backup folder.

The controller 180 controls the display unit 151 to output, together with the first backup image 510, the other backup images 511 obtained by imaging a home screen page when a control command for backup is applied, based on a touch input applied to the first backup image 510.

Referring to FIG. 7 (c), the controller 180 controls the display unit 151 to output a plurality of backup images in a state in which they are overlapped on the display unit 151. The controller 180 controls the display unit 151 to magnify one of the plurality of backup images and to display the other backup images, based on a touch input applied to the display unit 151.

Referring to FIG. 7 (d), the controller 180 controls the display unit 151 to output the plurality of backup images together. That is, the controller 180 controls the display unit 151 to output together the first backup image 510 with a reduced form and the other backup images 511.

Accordingly, the user can receive other home screen pages included in the backup data when the backup image configured with the home screen page is formed.

The controller 180 may allow the mobile terminal to be selectively recovered using the backup data by the plurality of backup images. For example, if at least one of the plurality of backup images is selected by the user, the controller 180 may control the mobile terminal so that only information corresponding to the selected backup image is recovered.

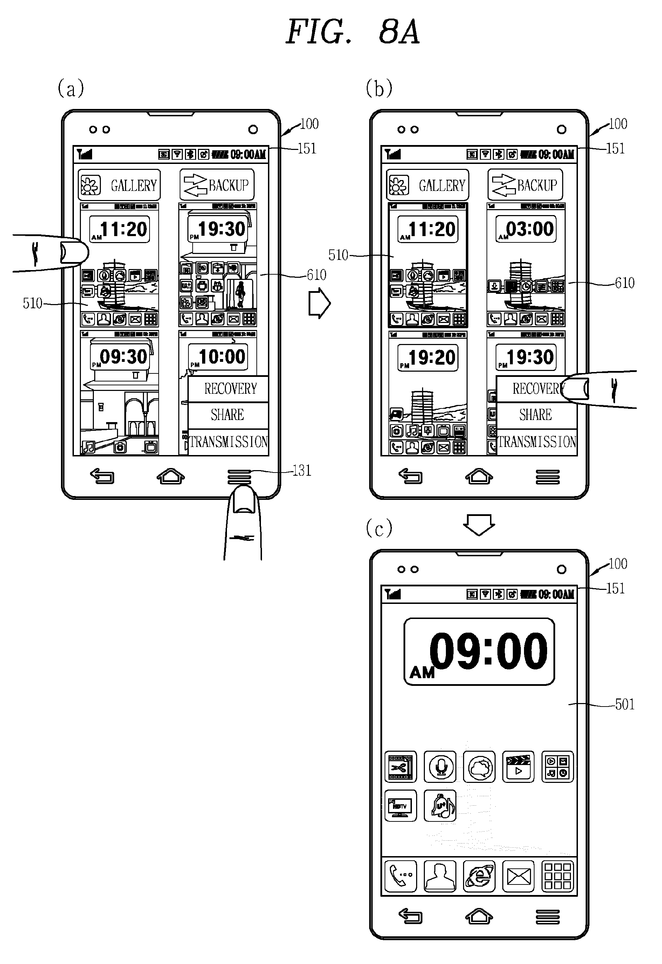

FIGS. 8A to 8D are conceptual views illustrating a control method for recovering the mobile terminal, using backup data.

A control method for recovering the mobile terminal on an execution screen of the gallery application including a backup image will be described with reference to FIG. 8A. FIG. 8A (a) illustrates the display unit 151 which outputs an execution screen 610 of the gallery application including the first backup image 510. The controller 180 may select one of a plurality of backup images, based on a user's touch input.

The controller 180 may recover the mobile terminal, based on a control command applied to the first manipulation unit 131 (e.g., a manipulation unit corresponding to a menu). That is, the controller 180 recovers the mobile terminal, based on backup data corresponding to the selected first backup image 510.

The controller 180 may perform recovery of the mobile terminal by activating the gallery application in which a backup image is stored and selecting the backup image.

If the recovery of the mobile terminal is performed, the controller 180 controls the display unit 151 to output first screen information 510 corresponding to the backup image. However, the controller 180 controls the display unit 151 to change and output the first screen information, based on a current state with respect to contents informing the current state.

The controller 180 controls the display unit 151 to output information displaying the current state, based on the sensed current state. For example, the controller 180 controls the display unit 151 to output current date, information on time and information on the position of the mobile terminal, based on information collected by the sensing unit 140.

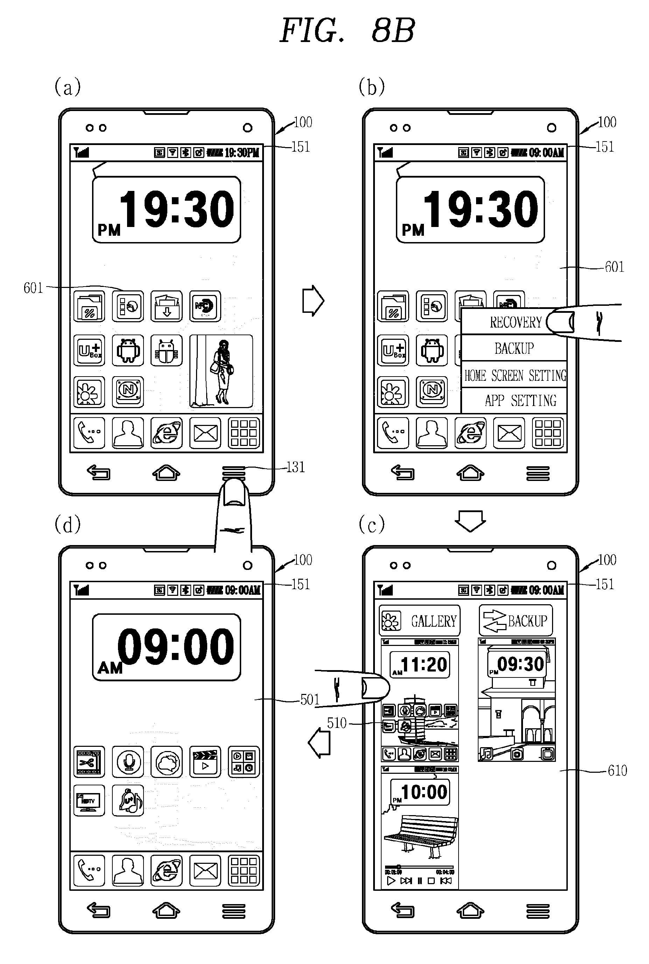

A control method for performing recovery of the mobile terminal in a state in which screen information is output will be described with reference to FIG. 8B. FIG. 8B (a) illustrates the display unit 151 which outputs a home screen page 601.

The controller 180 controls the display unit 151 to output a list receiving a touch input applied to perform the recovery of the mobile terminal, based on a touch input applied to the first manipulation unit 131.

The controller 180 controls the display unit 151 to output an execution screen 610 of the gallery application in which a backup image is included, based on a touch input applied to a graphic image corresponding to the recovery included in the list.

The controller 180 performs the recovery using the backup data, based on a touch input applied to the first backup image 510. Accordingly, the controller 180 controls the display unit 151 to output first screen information 501 corresponding to the first backup image 510.

Meanwhile, the user may select one of the plurality of backup images output on the execution screen 610 in order to recover the mobile terminal, based on specific data. That is, the user may select data to be recovered based on screen information output on the display unit 151 when backing up the mobile terminal.

Accordingly, the controller 180 can more conveniently select recovery data and recover the mobile terminal, without using any separate recovery program.

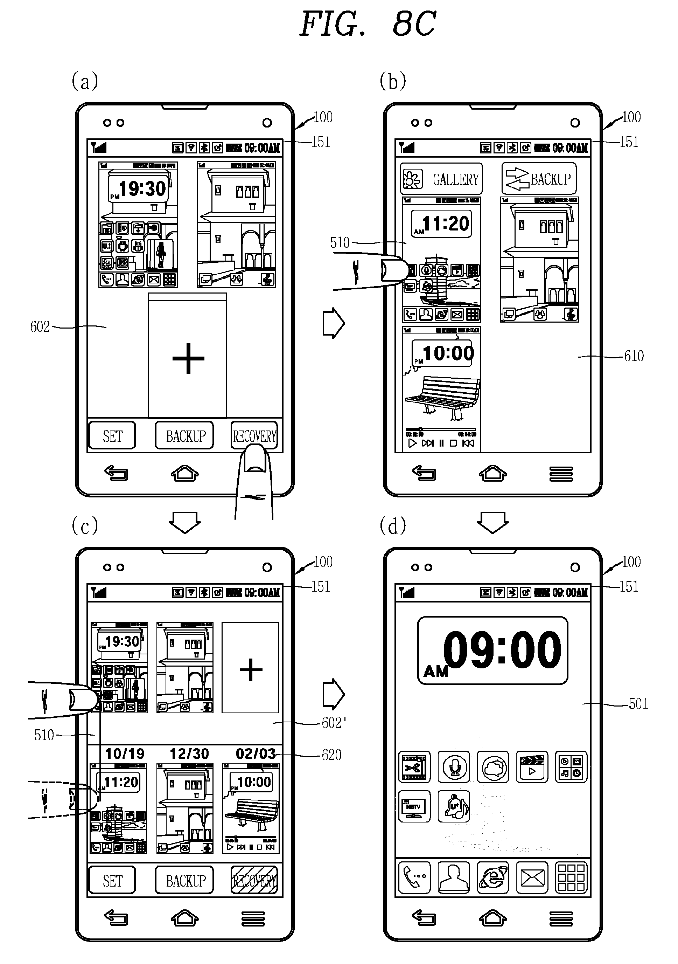

A control method for recovering the mobile terminal on an edition screen of a home screen page will be described with reference to FIG. 8C.

FIG. 8C (a) illustrates the display unit 151 which outputs a first edition screen 602 for editing a home screen page. The first edition screen 602 outputs at least one home screen page which is stored in the memory and output based on a touch input. The controller 180 controls the display unit 151 to output a recovery icon receiving a touch input applied to recover the mobile terminal on the first edition screen 602.

The controller 180 controls the display unit 151 to output an execution screen 610 of the gallery application including at least one backup image, based on a touch input applied to the recovery icon. If the first backup image 510 among the backup images is selected, the controller 180 recovers the mobile terminal, using backup data corresponding to the backup image.

Meanwhile, referring to FIGS. 8C (a) and (c), the controller 180 controls the display unit 151 to output the plurality of home screen pages in a first area 602' and output a plurality of backup images stored in the memory 160 in a second area 620 by dividing the first edition screen, based on a touch input applied to the recovery icon of the first edition screen. The controller 180 recovers the mobile terminal, using backup data corresponding to the first backup image 510, based on a touch input applied to the first backup image 510.

Here, the touch input applied to the first backup image 510 may correspond to a touch input of the dragging type, which is continuously applied to the first area 602' from the first backup image 510. For example, when the touch input applied to the first backup image 510 is cancelled on one home screen page of the first area 602', the controller 180 may control the home screen page and information related to the home screen page to be converted using backup data corresponding to the backup image. That is, the home screen page may control the display unit 151 to be converted into screen information corresponding to the backup image.

Accordingly, the controller 180 can recover all the other home screen pages stored in the memory 160, based on the backup data. However, the controller 180 may control only the selected home screen page to be recovered as screen information corresponding to the backup image.

That is, the user may recover only one home screen page to the stored previous state on the first edition screen outputting each home screen page.

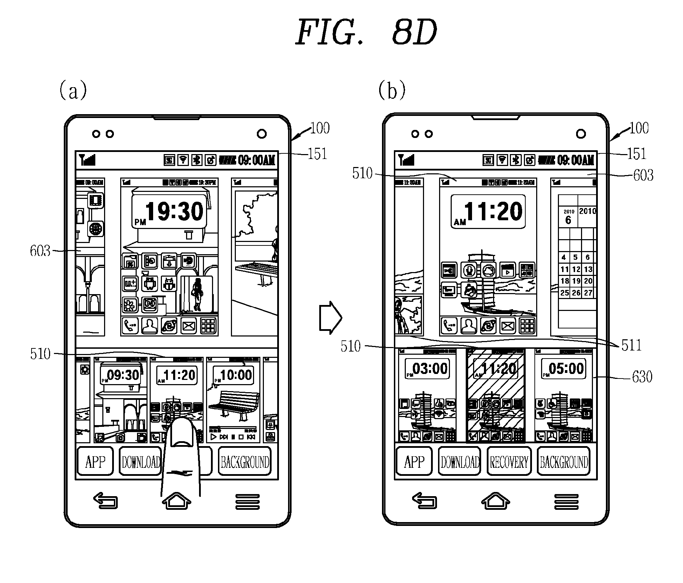

A control method for recovering the mobile terminal on the second edition screen will be described with reference to FIG. 8D.

Referring to FIG. 8D (a), the controller 180 controls the display unit 151 to output a plurality of backup images stored in the memory 160 through a recovery tap of the second edition screen 603. The second edition screen 603 includes at least one home screen page output on the display unit 151, based on a current user's touch input.

Referring to FIG. 8D (b), the controller 180 controls the display unit 151 to convert the home screen pages on the second edition screen 603 into the first backup image 510, based on a touch input applied to one of the plurality of backup images output through the recovery tap.

The controller 180 controls the display unit 151 to output, together with the first backup image 510, the other backup images 511 corresponding to another home screen page stored when the first screen information 510 (see FIG. 5) corresponding to one home screen page is stored as the first backup image 510 on the second edition screen 603.

Accordingly, when the mobile terminal is recovered by the first backup image 510, the user can previously identify home screen pages output on the display unit 151.

When the backup is performed using backup data, currently stored information may be deleted, new data may be installed, or overlapping information may be converted into information of the backup data. Accordingly, in the present invention, information currently stored in the mobile terminal and information to be converted by backup data can inform the user, and the user can selectively recover the backup data. Hereinafter, control methods for providing information changed by recovery and selectively recovering the mobile terminal will be described.

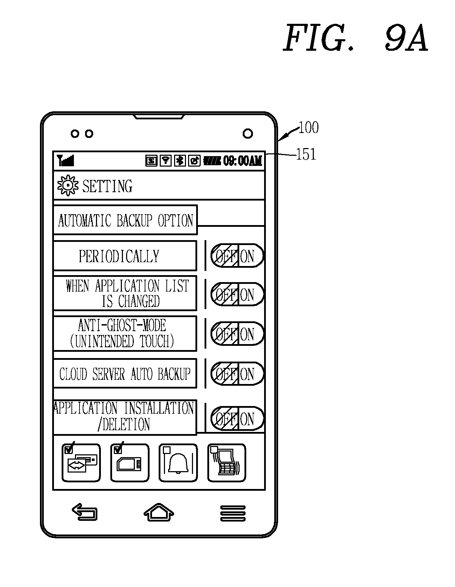

FIGS. 9A to 9G are conceptual views illustrating a control method for selective recovery.

An automatic backup setting will be described with reference to FIG. 9A. According to the exemplary embodiment, the controller 180 may automatically perform a backup function, based on a user's setting even when a user's control command is not applied.

For example, the controller 180 may control the backup function to be periodically performed at a predetermined time interval. When an application is installed, deleted or updated by the user, the controller 180 may recognize this as a control command and form backup data. In this case, the controller 180 may form, as a backup image, a home screen page to be specified as a representative screen or screen information where a change of the application is performed.

Meanwhile, the controller 180 may control the backup data to be formed based on the change of the application selected by the user's setting. That is, when the user selects an application, the controller 180 may control the backup function to be performed only when the selected application is changed. Accordingly, when an unwanted change of an application including important information is made, the mobile terminal can be recovered when the information is desired to return.

When a web storage (e.g., a cloud server) is automatically updated, the controller 180 may form the backup data, based on a user's setting.

When an unintended touch input is applied to the display unit 151 by the user, and information stored in the memory 160 is changed based on the touch input, the controller 180 may sense the unintended touch input. When a touch input is sensed as the unintended touch input, the controller 180 may recognize the touch input as a control command for performing backup and form backup data.

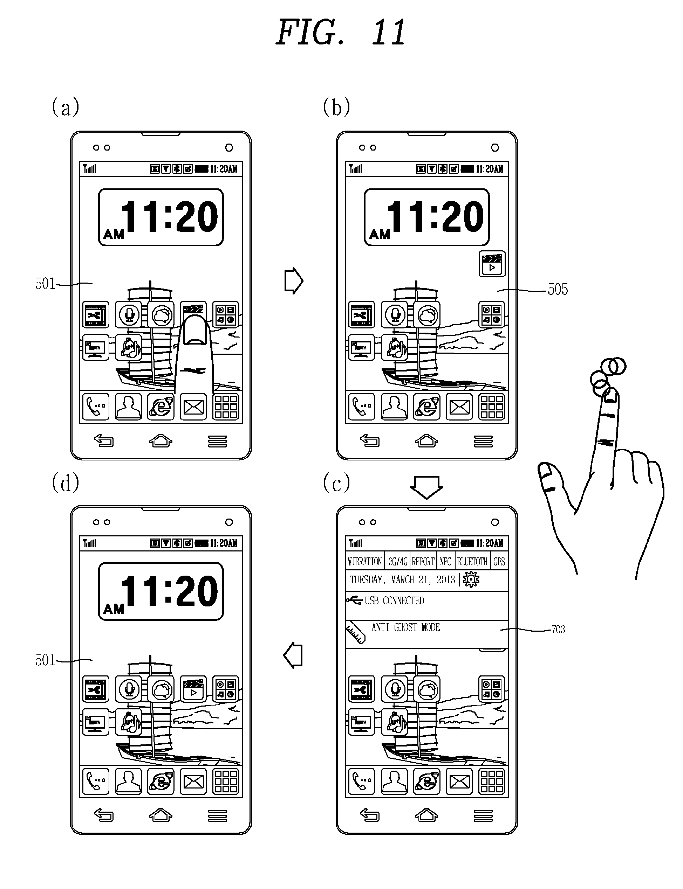

The unintended touch input will be described with reference to FIG. 11.

FIG. 11 is a conceptual view illustrating a control method for performing backup when an unintended touch input is applied to the display unit 151.

Referring to FIG. 11 (a) and (b), the controller 180 may change the layout of screen information, based on a touch input applied to the display unit 151. For example, the controller 180 may change the arrangement of icons included in the screen information, based on the touch input.

When a touch input applied to the display unit 151 is applied to the display unit 151 for a long period of time or when a touch noise pattern is repeated, the controller 180 may sense the touch input as an unwanted touch input, i.e., an erroneous touch input. The controller 180 may use the sensing unit mounted in the mobile terminal while the touch input is being applied. For example, the controller 180 may decide whether the user applies a touch input in a general state, using the proximity sensor, the illumination sensor, etc. When an external object of the mobile terminal excessively approaches the mobile terminal or when there is no adjacent external object to be sensed as a user, the controller 180 may recognize an erroneous input.

If the touch input is recognized as an erroneous input, the controller 180 backs up a state before the mobile terminal is controlled due to the erroneous input, and form backup data. The controller 180 forms, as a backup image, screen information when a touch input is applied to the display unit 151.

Referring to FIG. 11 (c), when the backup data are formed due to the erroneous input, the controller 180 may control the display 151 to output notification information 703 on the formed backup data. The notification information 703 may be displayed on a notification bar.

The controller 180 may recover the mobile terminal, based on the stored backup data, under a user's control command applied to the notification information 703. If a touch input is applied to the notification information 703, the controller 180 may immediately recover the mobile terminal to the state before the erroneous input.

However, the present invention is not limited thereto, and the controller 180 may activate the gallery application in which backup images are stored, based on the touch input applied to the notification information 703.

Accordingly, the user can automatically store a content changed by an erroneous touch input without intention, and recover the mobile terminal to the state before the erroneous touch input, using the stored backup data. Thus, it is possible to overcome the problem of an erroneous input in the mobile terminal controlled by a touch input.

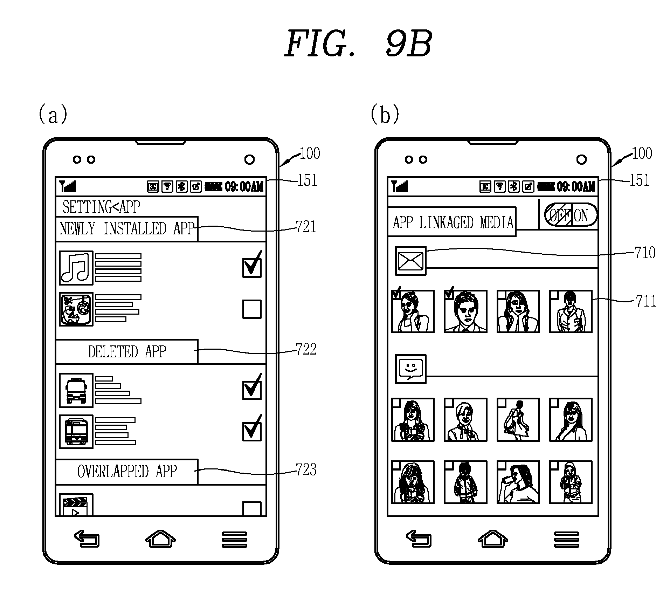

FIG. 9B is a conceptual view illustrating selective recovery of an application.

Referring to FIG. 9B (a), if the recovery of the mobile terminal is performed by a selected backup image, the controller 180 compares a current state of the mobile terminal with a state of the mobile terminal recovered by backup data, and provides information on an application newly installed by the backup data, a deleted application and an overlapped application.

That is, the controller 180 controls the display unit 151 to output a list of applications according to the change and information according to the applications. The controller 180 selects an application to be applied to recovery, based on a user's touch input, and recover only the selected application.

For example, an application selected among items of the newly installed application is not recovered by the application of recovery data. Only an application selected among the items of the newly installed application is newly installed in the mobile terminal in the recovery process.

Only the selective recovery of an application has been described in this figure, but the present invention is not limited thereto. For example, a setting state of each application, information changed by a user or provider, etc. may be selectively set.

The controller 180 may control the whole contents interlocked with the application to be recovered based on a touch input applied to an ON/OFF icon.

FIG. 9B (b) is a conceptual view illustrating a control method for recovering contents interlocked with an application.

Referring to FIG. 9B (b), when contents interlocked with an application are changed among applications overlapped with a previous state by the backup data, the controller 180 controls the display unit 151 to output the changed contents.

For example, when a photograph stored in the gallery application is transmitted or received by a message application, the photograph may be separately stored in a storage space of the message application. When the photograph is deleted from the storage space of the gallery application in the process in which the recovery is performed by the recovery data, the controller 180 may control the display unit 151 to identify whether the photograph is to be deleted.

That is, when various contents interlocked with the application are changed in addition to installation and deletion of each application, the controller 180 may control the display unit 151 to output screen information for identifying whether the change of the contents is to be recovered.

Accordingly, the user can identify a change of data in the backup process, and select data not to be recovered.

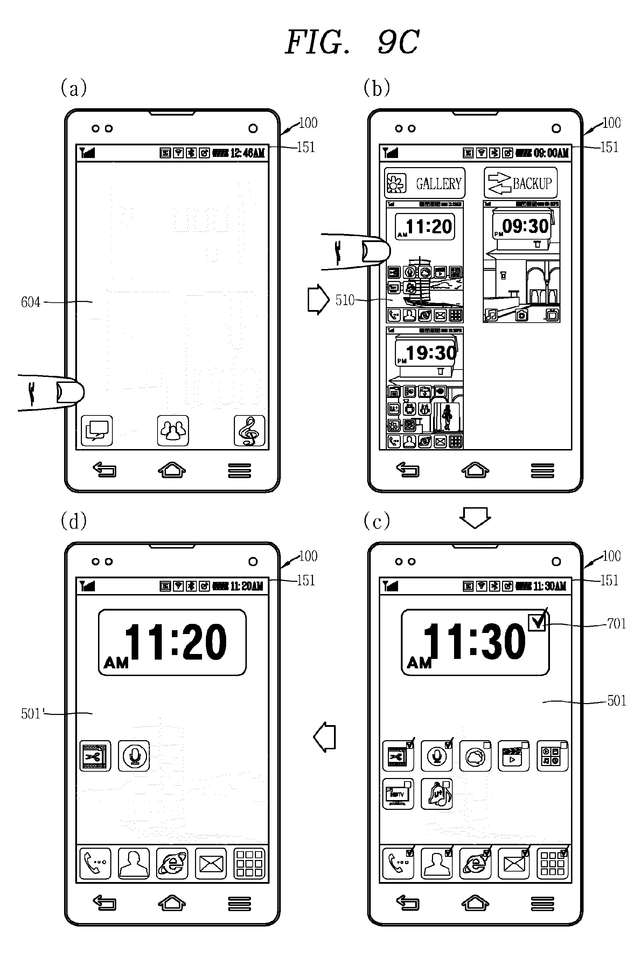

A control method for identifying information to be recovered using screen information changed by recovery data will be described with reference to FIG. 9C.

The controller 180 controls the display unit 151 to output a plurality of backup images, based on a touch input applied to second screen information 604. The controller 180 recovers the mobile terminal, based on backup data corresponding to the first backup image 510, under a touch input applied to the first backup image 510.

Referring to FIG. 9C (c), the controller 180 controls the display unit 151 to output first screen information 501 corresponding to the first backup image 510, using the backup data. The controller 180 controls the display unit 151 to output a first graphic image 701 for displaying an item changed by comparing the first screen information 501 with the second screen information 604.

The first graphic image 701 is formed in a check box form in each changed information. For example, the controller 180 controls the display unit 151 so that the first graphic image 701 is displayed in a newly installed icon, an icon having a changed position on the display unit 151, a widget newly created or having a changed position, an image, or the like.

The controller 180 selects information to be recovered based on a touch input applied to the first graphic image 701. For example, if an icon is selected based on the touch input applied to the first graphic image of the icon, the controller 180 installs an application corresponding to the icon, using the backup data. On the other hand, the controller 180 does not recover an application not selected by the user, and the like.

Referring to FIG. 9C (c) and (d), the controller 180 recovers only an icon and a widget, selected by the first graphic image 701, and does not recover an unselected icon and the like. The controller 180 does not install an application corresponding to the unselected icon and the like.

Accordingly, the user can select contents to be recovered by screen information stored as a backup image.

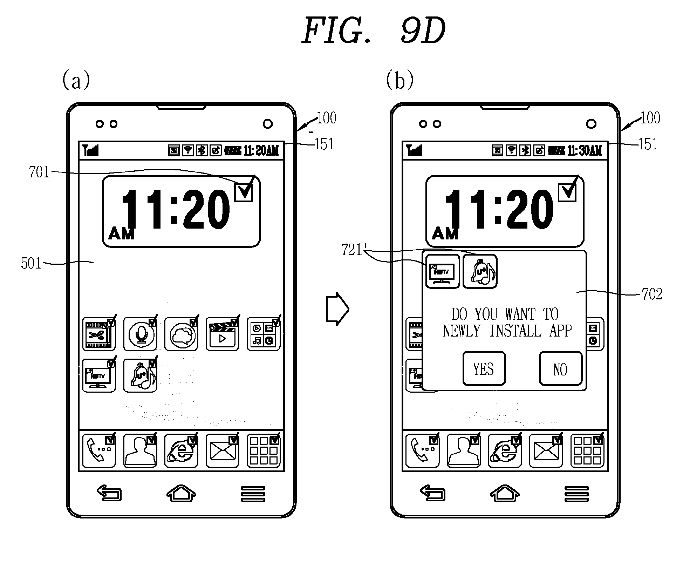

Referring to FIG. 9D, when an application of an icon selected by the first graphic image 701 is not installed in the current mobile terminal, the controller 180 installs the application, using the backup data.

The controller 180 may control the display unit 151 to output a notification window 721' for asking whether an application not installed in the current mobile terminal is to be installed. The notification window 721' may include information (e.g., an icon, etc.) of an application to be installed. The controller 180 may install the application, based on an installation command applied to the notification window 721'.

Accordingly, the user can determine whether an application not installed in the current mobile terminal is to be additionally installed, and it is possible to prevent inconvenience that an application intentionally deleted by the user is reinstalled.

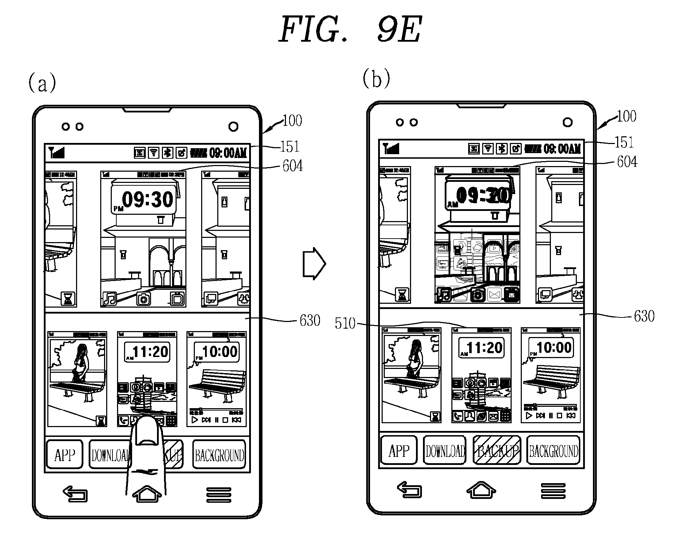

A control method for providing a recovery state by comparing current screen information with screen information stored as an backup image will be described with reference to FIG. 9E. The controller 180 controls the display unit 151 to output a home screen page 604 in a current state on the second edition screen 630 and output at least one backup image in a backup tap area.

The controller 180 controls the display unit 151 to output the first backup image 510 overlapped with the home screen page 604, based on a touch input applied to the first backup image 510. For example, the first backup image 510 may be output in a translucent state.

Accordingly, when the recovery is performed using backup data corresponding to the first backup image 510, the user can previously compare and identify a home screen page changed from the current state.

Although not shown in this figure, the controller 180 controls the display unit 151 to output another backup image and the home screen page, which are overlapped with each other, when a touch input is applied to another image except the first backup image 510.

The controller 180 may select backup data to be applied to recovery by selecting a backup image, and previously receive a change from the current state.

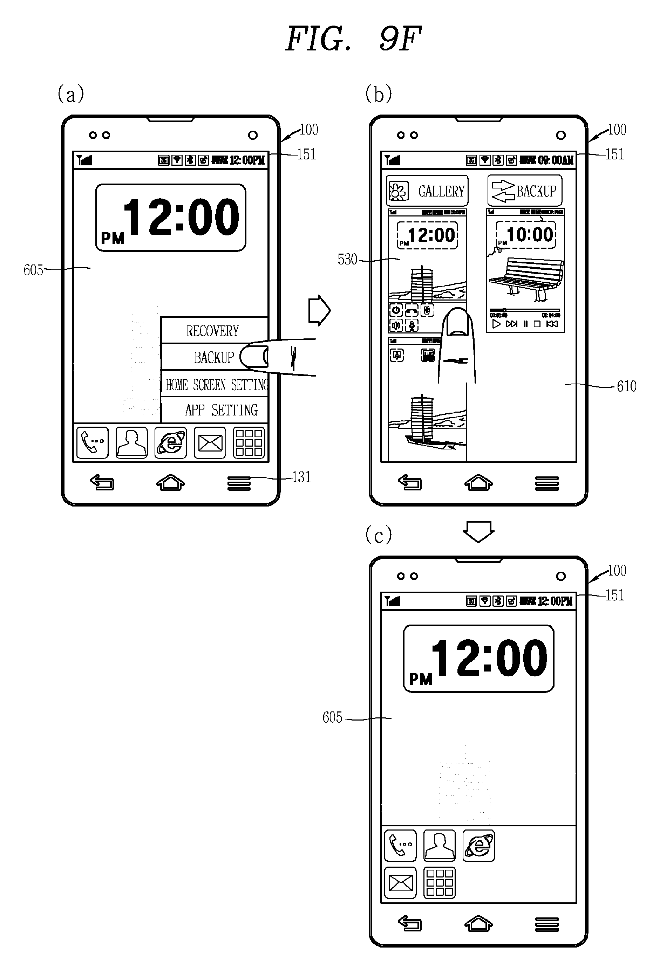

A control method for recovering the layout of a home screen page will be described with reference to FIG. 9F. The controller 180 controls the display unit 151 to output an execution screen 610 of the gallery application, outputting the backup image, based on a control command applied to a home screen page 605. The home screen page 605 includes at least one content, icon and the like. The contents, icons and the like are arranged by a user's setting.

According to the exemplary embodiment, backup images correspond to an imaged home screen page. That is, each home screen page formed as the backup image includes contents, icons and the like, arranged by a layout formed under a user's control. The controller 180 controls the layout included in the first backup image 510 to be applied to a current home screen page, based on a touch input applied to the first backup image 510.

That is, the controller 180 controls the display unit 151 to rearrange and output the contents, icons and the like, included in the home screen page by the layout. That is, the user may back up the layout included in the home screen page. The user may control only the layout to be changed using backup data, without a change of information included in the current home screen page.

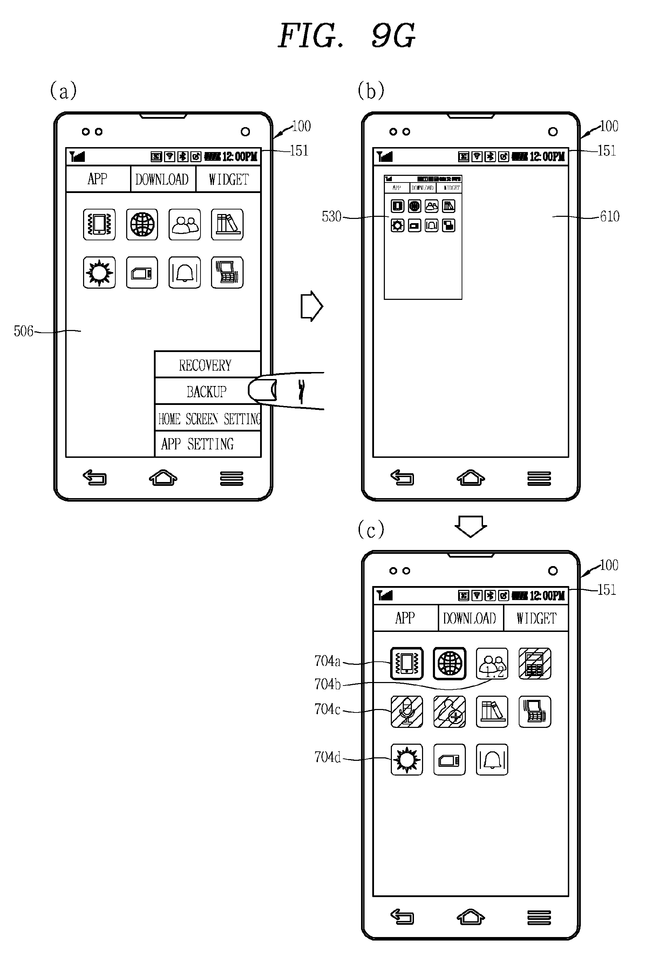

A control method for performing backup while third screen information 506 including an icon of an application stored in the mobile terminal is being output will be described with reference to FIG. 9G. The third screen information 506 includes at least one icon of the application, which is previously installed, installed by the user, or set by the user. The user may form a shortcut icon or create a widget on the home screen page, based on a touch input applied to the third screen information 506.

The controller 180 may form the third screen information 506 as a third backup image 530, based on a control command applied to the third screen information 506. The controller 180 recovers the mobile terminal, using backup data corresponding to the third backup image 530, based on a touch input applied to the third backup image 530.

The controller 180 controls the display unit 151 to output information of applications to be deleted, changed and added by the backup data. As shown in FIG. 9G (c), the controller 180 may control the display unit 151 to display, in different forms, an icon 704a of overlapped applications, an icon 704b (which may display version information) of an application of which version information to be changed by an update among the overlapped applications, an icon 704c of an application to be deleted, and an icon 704d of an application to be installed.

Accordingly, the user can receive information on a change of an application by the output form of an icon.

Although not shown in this figure, the controller 180 may output, together with the icon, a graphic image in a check box form, which identifies an item changed by the recovery.

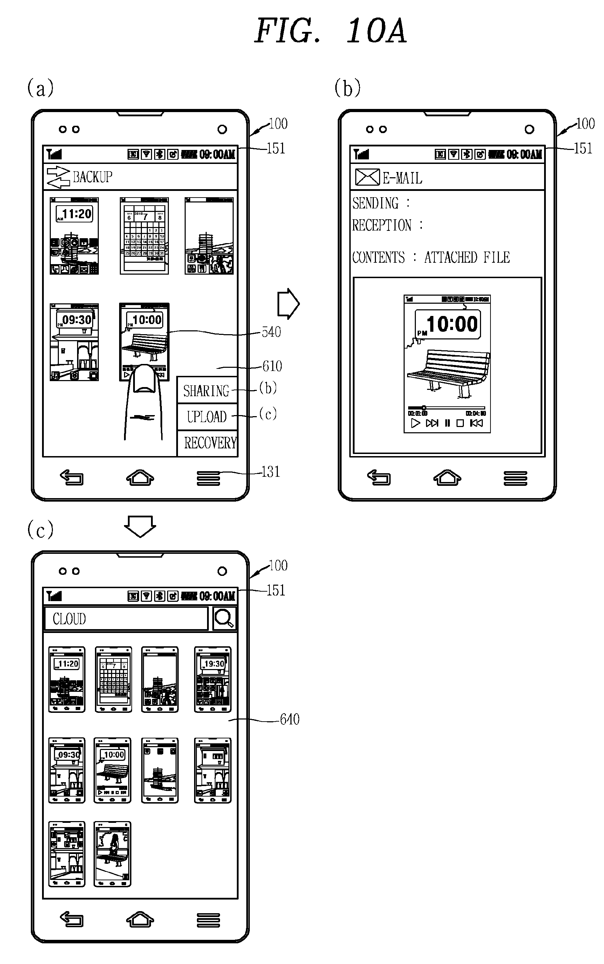

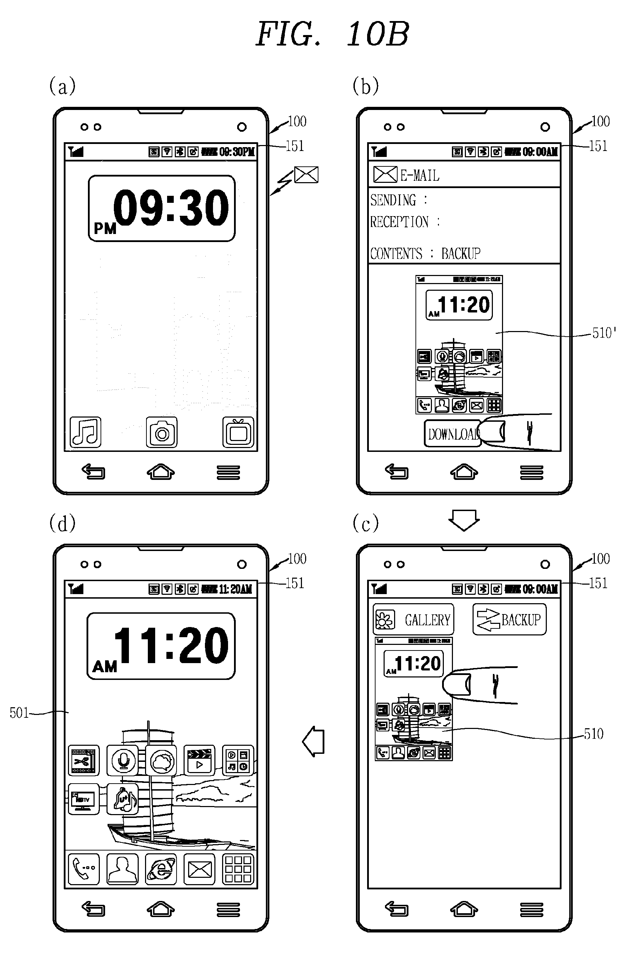

FIGS. 10A and 10B illustrate a control method for transmitting and receiving a backup file. As described above, the controller 180 creates a backup image obtained by imaging screen information and backup data for storing information when a user's control command is applied, based on the user's control command, and stores the backup image and the backup data. The user may identify the backup data, using the backup image.

Referring to FIGS. 10 (a) and (b), the controller 180 may transmit a backup file including a third backup image 540 through a web, based on a touch input applied to the third backup image 540 on an execution screen of the gallery application. For example, the controller 180 controls the display unit 151 to convert the execution screen into a screen for transmitting a mail through the web, based on the touch input.

Although not shown in these figures, the controller 180 may select backup data to be transmitted, based on a user's selection. The controller 180 may control the display unit 151 to block the transmission of information previously set among information included in the backup data.

For example, the controller 180 may control the display unit 151 to transmit information of an application installed among the information included in the backup data, information of the layout of a home screen page, and the like, and block the transmission of personal storage information input by the user. Here, the transmission of messages stored by the user may be blocked.

The backup file may be transmitted using the web. In addition, the backup file may be transmitted using a message application or chatting application.

Referring to FIG. 10A (a) and (c), the controller 180 may store the formed backup file in a web storage (e.g., a cloud storage).

A control method for recovering the mobile terminal, using a backup file downloaded on a web, will be described with reference to FIG. 10B.

The controller 180 may recover the mobile terminal, using a backup file downloaded on the web or attached to a received message or the like. Another mobile terminal different from the mobile terminal having the backup data formed therein may be recovered by applying the backup data.

Accordingly, the user can store in the mobile terminal, information included in the backup file stored in the other mobile terminal, and newly install an uninstalled application, using the backup data.

Thus, a user using a plurality of electronic devices can control a plurality of mobile terminals to store substantially identical information. Particularly, a user poor at the use of a mobile terminal can share a configuration for using a mobile terminal, formed by another user, as it is.

The controller 180 controls the memory 160 to download and store the backup file and store backup data included in the backup file in the storage space of the gallery application. The controller 180 controls the display unit 151 to output the first backup image 510 on an execution screen of the gallery application.

The controller 180 recovers the mobile terminal, using the backup data, based on a touch input applied to the first backup image 510. Accordingly, the controller 180 controls the display unit 151 to output first screen information corresponding to the first backup image 510.

The foregoing embodiments and advantages are merely exemplary and are not to be construed as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A mobile terminal, comprising:
a display unit (151) configured to output screen information;
a memory (160) configured to store, together with backup data of the mobile terminal, a backup image obtained by imaging the screen information (501), (510) at the time when a control command is input, based on the control command input while the screen information (501)is being output; and
a controller (180) configured to recover the mobile terminal, using the backup data, based on a touch input applied to the backup image (510).

2. The mobile terminal of claim 1, further comprising a memory (160) configured to store various information of the mobile terminal,
wherein the backup data are formed with information stored in the memory (160) at the time when the control command is input among the information stored in the memory.

3. The mobile terminal of claim 2, wherein the backup data are formed with some information related to the screen information (501) output on the display unit (151) at the time when the control command is input among the information stored in the memory.

4. The mobile terminal of claim 2, wherein the information stored in the memory (160) includes at least one of an application installed in the mobile terminal, a media file, a telephone number of an external terminal, driving setting information of the mobile terminal, an icon included in the screen information (501) to execute the application, and a layout of the screen information.

5. The mobile terminal of claim 3, wherein the controller (180) recovers at least some of the information included in the memory, based on a user's selection.

6. The mobile terminal of claim 5, wherein the controller (180) controls the display unit (151) to display information to be again corrected by the backup data, based on a touch input applied to the backup image (510) after the information stored in the memory (160) is changed by a user.

7. The mobile terminal of claim 6, wherein the controller (180) controls the display unit (151) to display some information deleted by the backup data among the changed information stored in the memory (160) and information to be installed by the backup data.

8. The mobile terminal of claim of one of any claims 1 to 7, wherein the control command is created by the user, based on deletion or installation of an application.

9. The mobile terminal of claim of one of any claims 1 to 7, wherein the screen information (501) includes at least one content arranged by a specific layout, and
wherein the control command is input based on a change of the layout.

10. The mobile terminal of claim 9, wherein the screen information (501) corresponds to one of a plurality of home screen pages to be selectively output on the display unit (151) by the user, and
wherein the controller (180) controls the memory (160) to store a plurality of backup images (510) corresponding to the respective home screen pages, based on the control command.

11. The mobile terminal of claim 9, wherein the home screen page includes at least one content arranged by a layout set by the user, and
wherein the controller (180) forms backup data including the layout of the home screen page, and forms the home screen page as a backup image (510).

12. The mobile terminal of claim of one of any claims 1 to 7, wherein the controller (180) activates a memo mode for outputting an image according to a trace of a touch input applied to the screen information, based on a previously set control command, and
wherein the controller (180) forms, as a backup image (510), the image based on the touch input and the screen information.

13. The mobile terminal of claim 12, wherein the edition screen includes a previously stored backup image (510), and
wherein the controller (180) recovers the mobile terminal, based on backup data corresponding to a touch input applied to the previously stored backup image (510).

14. A method for controlling a mobile terminal, the method comprising:
outputting screen information (501) on a display unit;
backing up information stored in the mobile terminal, based on a control command applied while the screen information (501) is being output;
forming the screen information (501) as a backup image (510) and storing the backup image (510);
outputting the stored backup image (510) on the display unit; and
recovering the mobile terminal, using the backup data, based on a touch input applied to the backup image (510).

15. The method of claim 14, further comprising outputting information to be changed by the backup data, based on a touch input applied to the backup image (510).
